# EUROPEAN PATENT APPLICATION

(11) **EP 4 608 019 A1**
(43) Date of publication of application: **27.08.2025**
(21) Application number: 23880226.8
(22) Date of filing: 18.10.2023
(51) Int. Cl.: H04W 52/02, H04W 72/23, H04W 72/04, H04W 16/28, H04W 72/12, H04L 5/00

(54) **METHOD AND DEVICE FOR DYNAMIC ON-OFF OF TRP IN COMMUNICATION SYSTEM**

(30) Priority: 18.10.2022 KR 20220134257
(71) Applicant: Electronics and Telecommunications Research Institute, Daejeon 34129 (KR)
(72) Inventor: MOON, Sung Hyun, Daejeon 34129 (KR); LEE, Jung Hoon, Daejeon 34129 (KR); KIM, Cheul Soon, Daejeon 34129 (KR)
(74) Representative: Betten & Resch
(86) International application number: PCT/KR2023/016164
(87) International publication number: WO 2024/085649

(57) **Abstract**

A method and a device for dynamic on-off of a TRP in a communication system are disclosed. A method of a first terminal comprises the steps of: performing communication with a first TRP and a second TRP associated with a base station; receiving a TCI on-off indication for at least one TRP among the first TRP and the second TRP; identifying a TCI indicated for an off state, on the basis of the TCI on-off indication; and performing communication with the remaining TRP other than one TRP, for which the TCI has been configured, among the first TRP and the second TRP.

## Description

### [Technical Field]

The present disclosure relates to a technique for transmitting and receiving signals in a communication system, and more particularly, to a technique for dynamically turning on or off (e.g., activating or deactivating) a transmission and reception point (TRP).

### [Background Art]

After the commercialization of fifth generation (5G) communication, innovation and economic benefits utilizing the 5G technology are expected across various industries. The 5G communication system (e.g., new radio (NR) communication system) supports a wider range of services and scenarios compared to traditional communication systems. To support various services and scenarios, the 5G communication system has adopted advanced technologies, and available frequency bands of the 5G communication system have been expanded to include millimeter-wave bands. The usage scenarios of the 5G communication system include enhanced Mobile BroadBand (eMBB), Ultra Reliable Low Latency Communication (URLLC), massive Machine Type Communication (mMTC), and the like. In addition to the above usage scenarios, specialized functions tailored to various vertical industries are continuously being introduced to the 5G communication system, and functionalities and technologies of the 5G communication system are continuously evolving.

Meanwhile, low-power operation technologies of communication systems are receiving attention to address climate change and pursue sustainable development. While power consumption improvement technologies in communication systems have mainly evolved from the terminal perspective, application of low-power operation technologies in networks is also essential to achieve goals such as cost reduction in operating expenses (OPEX) for telecommunication operators and carbon neutrality.

### [Disclosure]

### [Technical Problem]

The present disclosure is directed to providing a method and an apparatus for dynamically turning on or off a TRP in a communication system.

### [Technical Solution]

A method of a first terminal, according to exemplary embodiments of the present disclosure for achieving the above-described objective, may comprise: performing communication with a first transmission and reception point (TRP) and a second TRP associated with the base station; receiving a transmission configuration information (TCI) ON/OFF indication for at least one TRP among the first TRP and the second TRP; identifying a TCI indicated to be in an OFF state based on the TCI ON/OFF indication; and performing communication with a remaining TRP other than the at least one TRP in which the TCI is configured among the first TRP and the second TRP.

One TCI may be configured in each of the first TRP and the second TRP, an OFF state indication for the TCI configured in the first TRP may be an OFF state indication for the first TRP, and an OFF state indication for the TCI configured in the second TRP may be an OFF state indication for the second TRP.

The TCI ON/OFF indication may be included in group common downlink control information (DCI) transmitted to a terminal group including the first terminal and a second terminal, and the first terminal and the second terminal included in the terminal group may be all terminals connected to the at least one TRP in which the TCI indicated to be in the OFF state is configured.

The TCI ON/OFF indication may indicate an OFF state of an n-th TCI among a plurality of TCIs configured in the first terminal and the second terminal, an index of the n-th TCI configured in the first terminal may be different from an index of the n-th TCI configured in the second terminal, and n may be a natural number.

When the TCI indicated to be in the OFF state is a downlink TCI, the first terminal may not perform downlink communication based on the downlink TCI with the at least one TRP, and when the TCI indicated to be in the OFF state is an uplink TCI, the first terminal may not perform uplink communication based on the uplink TCI with the at least one TRP.

The method may further comprise: when a plurality of TCIs including the TCI indicated to be in the OFF state are configured in the at least one TRP, performing communication with the at least one TRP based on remaining TCI(s) not indicated to be in the OFF state among the plurality of TCIs.

The communication between the first terminal and the at least one TRP configured with the plurality of TCIs may be switched from multi-TCI-based transmission to single-TCI-based transmission by the TCI ON/OFF indication.

The method may further comprise: receiving information on an application time of the TCI ON/OFF indication, wherein the TCI ON/OFF indication is applied after the application time.

The method may further comprise: receiving information on a duration to which the TCI ON/OFF indication is applied, wherein the TCI ON/OFF indication is applied during the duration, and the TCI ON/OFF indication is not applied after the duration.

A method of a first terminal, according to exemplary embodiments of the present disclosure for achieving the above-described objective, may comprise: receiving configuration of a first control resource set (CORESET) pool for a first transmission and reception point (TRP) associated with a base station and configuration of a second CORESET pool for a second TRP associated with the base station; receiving an ON/OFF indication for at least one CORESET pool among the first CORESET pool or the second CORESET pool; identifying one CORESET pool indicated to be in an OFF state based on the ON/OFF indication; and performing a physical downlink control channel (PDCCH) monitoring operation in a remaining CORESET pool other than the one CORESET pool among the first CORESET pool and the second CORESET pool.

The ON/OFF indication may be included in group common downlink control information (DCI) transmitted to a terminal group including the first terminal and a second terminal, and the first terminal and the second terminal included in the terminal group may be all terminals in which the one CORESET pool indicated to be in the OFF state is configured.

The PDCCH monitoring operation may not be performed in the one CORESET pool indicated to be in the OFF state.

When the one CORESET pool indicated to be in the OFF state includes a plurality of CORESETs, the PDCCH monitoring operation may not be performed in all of the plurality of CORESETs.

At least one of downlink communication or uplink communication based on a transmission configuration information (TCI) configured in the one CORESET pool indicated to be in the OFF state may not be performed.

A method of a base station, according to exemplary embodiments of the present disclosure for achieving the above-described objective, may comprise: transmitting, to one or more terminals, a transmission configuration information (TCI) ON/OFF indication for at least one transmission and reception point (TRP) among a first TRP and a second TRP associated with the base station; and performing communication with the one or more terminals using a remaining TRP other than the at least one TRP in which a TCI indicated to be in an OFF state based on the TCI ON/OFF indication is configured.

One TCI may be configured in each of the first TRP and the second TRP, an OFF state indication for the TCI configured in the first TRP may be an OFF state indication for the first TRP, and an OFF state indication for the TCI configured in the second TRP may be an OFF state indication for the second TRP.

The TCI ON/OFF indication may be included in group common downlink control information (DCI) transmitted to a terminal group including the one or more terminals, and the one or more terminals included in the terminal group may be all terminals connected to the at least one TRP in which the TCI indicated to be in the OFF state is configured.

The TCI ON/OFF indication may indicate an OFF state of an n-th TCI among a plurality of TCIs configured in the one or more terminals, an index of the n-th TCI configured in a first terminal among the one or more terminals may be different from an index of the n-th TCI configured in a second terminal among the one or more terminals, and n may be a natural number.

When the TCI indicated to be in the OFF state is a downlink TCI, downlink communication based on the downlink TCI may not be performed by the at least one TRP, and when the TCI indicated to be in the OFF state is an uplink TCI, uplink communication based on the uplink TCI may not be performed by the at least one TRP.

The method may further comprise: transmitting at least one of information on an application time of the TCI ON/OFF indication or information on a duration of the TCI ON/OF indication to the one or more terminals, wherein the application time is a time when the TCI ON/OFF indication is applied, and the duration is a duration to which the TCI ON/OF indication is applied.

### [Advantageous Effects]

According to the present disclosure, a base station may communicate with terminal(s) using a plurality of TRPs. The base station can transmit an ON/OFF indication for a TCI or CORESET pool to the terminal(s) to indicate to turn on or off a TRP. The terminal(s) may receive the ON/OFF indication from the base station, and may not perform communication with a TRP for which a TCI indicated to be in the OFF state by the ON/OFF indication is configured or may not perform a monitoring operation on a CORESET pool indicated to be in the OFF state by the ON/OFF indication. According to the above-described method, a state of the TRP can be switched from the ON state to the OFF state, and the TRP in the OFF state may not perform communication with the terminal(s). Alternatively, the TRP in the OFF state may only perform partial communication with the terminal(s). Accordingly, energy consumption in the network can be reduced. In other words, the energy efficiency of the network can be improved.

### [Description of Drawings]

FIG. 1 is a conceptual diagram illustrating a first exemplary embodiment of a communication system.
FIG. 2 is a block diagram illustrating a first exemplary embodiment of an apparatus.
FIG. 3 is a conceptual diagram of a dynamic ON/OFF method for TRP(s).
FIG. 4 is a conceptual diagram illustrating a first exemplary embodiment of a TCI ON/OFF indication method.
FIG. 5 is a conceptual diagram illustrating a second exemplary embodiment of a TCI ON/OFF indication method.
FIG. 6 is a conceptual diagram illustrating a first exemplary embodiment of a TCI ON/OFF indication method by DCI.
FIG. 7 is a conceptual diagram illustrating a first exemplary embodiment of a repetitive PDSCH transmission method according to a TCI OFF indication.

### [Mode for Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system may be the 4G communication system (e.g., Long-Term Evolution (LTE) communication system or LTE-A communication system), the 5G communication system (e.g., New Radio (NR) communication system), the sixth generation (6G) communication system, or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, 'LTE' may refer to '4G communication system', 'LTE communication system', or 'LTE-A communication system', and 'NR' may refer to '5G communication system' or 'NR communication system'.

In exemplary embodiments, 'configuration of an operation (e.g., transmission operation)' may mean 'signaling of configuration information (e.g., information element(s), parameter(s)) for the operation' and/or 'signaling of information indicating performing of the operation'. In other words, 'an operation (e.g., transmission operation) being configured in a communication node' may mean that the communication node receives 'configuration information (e.g., information element, parameter) for the operation' and/or 'information indicating to perform the operation'. 'An information element (e.g., parameter) being configured in a communication node' may mean that the information element is signaled to the communication node (e.g., the communication node receives the information element)'. Signaling may be at least one of system information (SI) signaling (e.g., transmission of a system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

In the present disclosure, a 'time' may mean a time point, and 'time' and 'time point' may be used with the same meaning. A reception time of a signal or channel may mean a reception start time or a reception end time. A transmission time of a signal or channel may mean a transmission start time or a transmission end time.

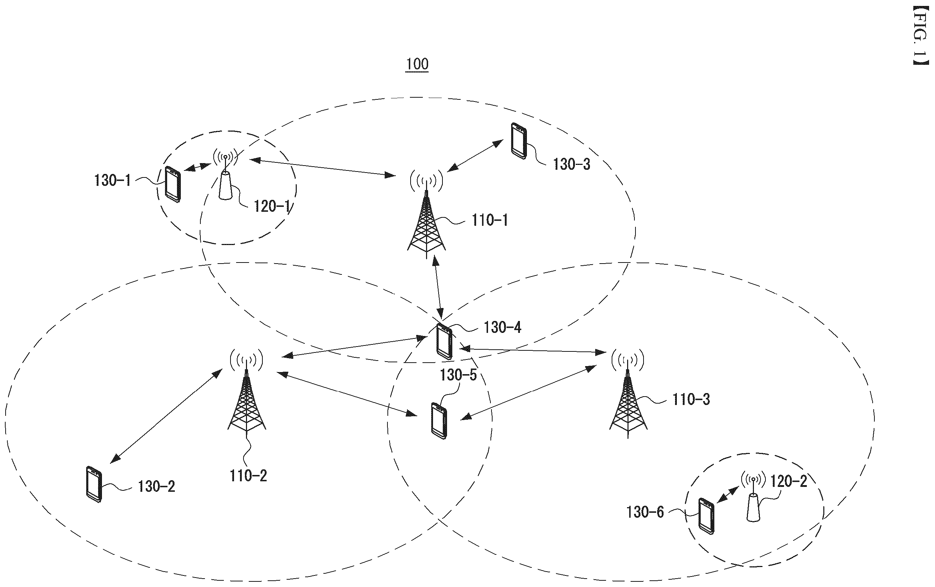

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. Also, the communication system 100 may further comprise a core network (e.g., a serving gateway (S-GW), a packet data network (PDN) gateway (P-GW), and a mobility management entity (MME)). When the communication system 100 is a 5G communication system (e.g., New Radio (NR) system), the core network may include an access and mobility management function (AMF), a user plane function (UPF), a session management function (SMF), and the like.

The plurality of communication nodes 110 to 130 may support communication protocols defined in the 3rd generation partnership project (3GPP) technical specifications (e.g., LTE communication protocol, LTE-A communication protocol, NR communication protocol, or the like). The plurality of communication nodes 110 to 130 may support code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform-spread-OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter band multi-carrier (FBMC) based communication protocol, universal filtered multi-carrier (UFMC) based communication protocol, space division multiple access (SDMA) based communication protocol, or the like. Each of the plurality of communication nodes may mean an apparatus or a device. Exemplary embodiments may be performed by an apparatus or device. A structure of the apparatus (or, device) may be as follows.

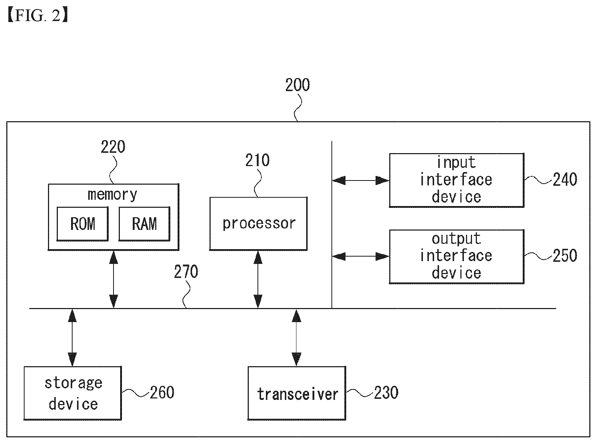

FIG. 2 is a block diagram illustrating a first exemplary embodiment of an apparatus.

Referring to FIG. 2, an apparatus 200 may comprise at least one processor 210, a memory 220, and a transceiver 230 connected to the network for performing communications. Also, the apparatus 200 may further comprise an input interface device 240, an output interface device 250, a storage device 260, and the like. The respective components included in the apparatus 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to the cell coverage of the first base station 110-1. Also, the second terminal 130-2, the fourth terminal 130-4, and the fifth terminal 130-5 may belong to the cell coverage of the second base station 110-2. Also, the fifth base station 120-2, the fourth terminal 130-4, the fifth terminal 130-5, and the sixth terminal 130-6 may belong to the cell coverage of the third base station 110-3. Also, the first terminal 130-1 may belong to the cell coverage of the fourth base station 120-1, and the sixth terminal 130-6 may belong to the cell coverage of the fifth base station 120-2.

Here, each of the plurality of base stations 110-1, 110-2, 110-3, 120-1, and 120-2 may be referred to as NodeB (NB), evolved NodeB (eNB), gNB, advanced base station (ABS), high reliability-base station (HR-BS), base transceiver station (BTS), radio base station, radio transceiver, access point (AP), access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may be referred to as user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul link or a non-ideal backhaul link, and exchange information with each other via the ideal or non-ideal backhaul. Also, each of the plurality of base stations 110-1, 110-2, 110-3, 120-1, and 120-2 may be connected to the core network through the ideal backhaul link or non-ideal backhaul link. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., single-user MIMO (SU-MIMO), multi-user MIMO (MU-MIMO), massive MIMO, or the like), a coordinated multipoint (CoMP) transmission, a carrier aggregation (CA) transmission, a transmission in unlicensed band, a device-to-device (D2D) communication (or, proximity services (ProSe)), an Internet of Things (IoT) communication, a dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

Each of the first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

The present disclosure may relate to a technology for transmitting and receiving signals in a communication system. The communication system may include one or more TRPs. Methods for dynamically turning on or off (e.g., dynamically activating or deactivating) some TRPs (i.e. dynamic ON/OFF methods) may be required. In the present disclosure, the dynamic ON/OFF method for TRP(s) may be referred to as a dynamic TRP ON/OFF method, dynamic TRP ON/OFF operation, dynamic TRP ON/OFF procedure, dynamic TRP activation/deactivation method, dynamic TRP activation/deactivation operation, and/or dynamic TRP activation/deactivation procedure. The base station and/or terminal may perform the dynamic TRP ON/OFF operation.

A numerology applied to physical signals and channels in the communication system (e.g., NR communication system or 6G communication system) may be variable. The numerology may vary to satisfy various technical requirements of the communication system. In the communication system to which a cyclic prefix (CP) based OFDM waveform technology is applied, the numerology may include a subcarrier spacing and a CP length (or CP type). Table 1 below may be a first exemplary embodiment of configuration of numerologies for the CP-based OFDM. The subcarrier spacings may have an exponential multiplication relationship of 2, and the CP length may be scaled at the same ratio as the OFDM symbol length. Depending on a frequency band in which the communication system operates, at least some numerologies among the numerologies of Table 1 may be supported. In addition, in the communication system, numerologies not listed in Table 1 may be further supported. CP type(s) not listed in Table 1 (e.g., extended CP) may be additionally supported for a specific subcarrier spacing (e.g., 60 kHz).

**[Table 1]**

| Subcarrier spacing | 15kHz | 30kHz | 60kHz | 120kHz | 240kHz | 480kHz |
|---|---|---|---|---|---|---|
| OFDM symbol length [µs] | 66.7 | 33.3 | 16.7 | 8.3 | 4.2 | 2.1 |
| CP length [µs] | 4.76 | 2.38 | 1.19 | 0.60 | 0.30 | 0.15 |
| Number of OFDM symbols within 1ms | 14 | 28 | 56 | 112 | 224 | 448 |

In the following description, a frame structure in the communication system will be described. In the time domain, elements constituting a frame structure may include a subframe, slot, mini-slot, symbol, and the like. The subframe may be used as a unit for transmission, measurement, and the like, and the length of the subframe may have a fixed value (e.g., 1 ms) regardless of a subcarrier spacing. A slot may comprise consecutive symbols (e.g., 14 OFDM symbols). The length of the slot may be variable differently from the length of the subframe. For example, the length of the slot may be inversely proportional to the subcarrier spacing.

A slot may be used as a unit for transmission, measurement, scheduling, resource configuration, timing (e.g., scheduling timing, hybrid automatic repeat request (HARQ) timing, channel state information (CSI) measurement and reporting timing, etc.), and the like. The length of an actual time resource used for transmission, measurement, scheduling, resource configuration, etc. may not match the length of a slot. A mini-slot may include consecutive symbol(s), and the length of a mini-slot may be shorter than the length of a slot. A mini-slot may be used as a unit for transmission, measurement, scheduling, resource configuration, timing, and the like. A mini-slot (e.g., the length of a mini-slot, a mini-slot boundary, etc.) may be predefined in the technical specification. Alternatively, a mini-slot (e.g., the length of a mini-slot, a mini-slot boundary, etc.) may be configured (or indicated) to the terminal. When a specific condition is satisfied, use of a mini-slot may be configured (or indicated) to the terminal.

The base station may schedule a data channel (e.g., physical downlink shared channel (PDSCH), physical uplink shared channel (PUSCH), physical sidelink shared channel (PSSCH)) using some or all of symbols constituting a slot. In particular, for URLLC transmission, unlicensed band transmission, transmission in a situation where an NR communication system and an LTE communication system coexist, and multi-user scheduling based on analog beamforming, a data channel may be transmitted using a portion of a slot. In addition, the base station may schedule a data channel using a plurality of slots. In addition, the base station may schedule a data channel using at least one mini-slot.

In the frequency domain, elements constituting the frame structure may include a resource block (RB), subcarrier, and the like. One RB may include consecutive subcarriers (e.g., 12 subcarriers). The number of subcarriers constituting one RB may be constant regardless of a numerology. In this case, a bandwidth occupied by one RB may be proportional to a subcarrier spacing of a numerology. An RB may be used as a transmission and resource allocation unit for a data channel, control channel, and the like. Resource allocation of a data channel may be performed in units of RBs or RB groups (e.g., resource block group (RBG)). One RBG may include one or more consecutive RBs. Resource allocation of a control channel may be performed in units of control channel elements (CCEs). One CCE in the frequency domain may include one or more RBs.

In the communication system, a slot (e.g., slot format) may be composed of a combination of one or more of downlink period, flexible period (or unknown period), and an uplink period. Each of a downlink period, flexible period, and uplink period may be comprised of one or more consecutive symbols. A flexible period may be located between a downlink period and an uplink period, between a first downlink period and a second downlink period, or between a first uplink period and a second uplink period. When a flexible period is inserted between a downlink period and an uplink period, the flexible period may be used as a guard period.

A slot may include one or more flexible periods. Alternatively, a slot may not include a flexible period. The terminal may perform a predefined operation in a flexible period. Alternatively, the terminal may perform an operation configured by the base station semi-statically or periodically. For example, the periodic operation configured by the base station may include a PDCCH monitoring operation, synchronization signal/physical broadcast channel (SS/PBCH) block reception and measurement operation, channel state information-reference signal (CSI-RS) reception and measurement operation, downlink semi-persistent scheduling (SPS) PDSCH reception operation, sounding reference signal (SRS) transmission operation, physical random access channel (PRACH) transmission operation, periodically-configured PUCCH transmission operation, PUSCH transmission operation according to a configured grant, and the like. A flexible symbol may be overridden by a downlink symbol or an uplink symbol. When a flexible symbol is overridden by a downlink or uplink symbol, the terminal may perform a new operation instead of the existing operation in the corresponding flexible symbol (e.g., overridden flexible symbol).

A slot format may be configured semi-statically by higher layer signaling (e.g., radio resource control (RRC) signaling). Information indicating a semi-static slot format may be included in system information, and the semi-static slot format may be configured in a cell-specific manner. In addition, a semi-static slot format may be additionally configured for each terminal through terminal-specific higher layer signaling (e.g., RRC signaling). A flexible symbol of a slot format configured cell-specifically may be overridden by a downlink symbol or an uplink symbol by terminal-specific higher layer signaling. In addition, a slot format may be dynamically indicated by physical layer signaling (e.g., slot format indicator (SFI) included in downlink control information (DCI)). The semi-statically configured slot format may be overridden by a dynamically indicated slot format. For example, a semi-static flexible symbol may be overridden by a downlink symbol or an uplink symbol by SFI.

The base station and the terminal may perform downlink operations, uplink operations, and sidelink operations in a bandwidth part. A bandwidth part may be defined as a set of consecutive RBs (e.g., physical resource blocks (PRBs)) having a specific numerology in the frequency domain. RBs constituting one bandwidth part may be consecutive in the frequency domain. One numerology may be used for transmission of signals (e.g., transmission of control channel or data channel) in one bandwidth part. In exemplary embodiments, when used in a broad sense, a 'signal' may refer to any physical signal and channel. A terminal performing an initial access procedure may obtain configuration information of an initial bandwidth part from the base station through system information. A terminal operating in an RRC connected state may obtain the configuration information of the bandwidth part from the base station through terminal-specific higher layer signaling.

The configuration information of the bandwidth part may include a numerology (e.g., a subcarrier spacing and a CP length) applied to the bandwidth part. Also, the configuration information of the bandwidth part may further include information indicating a position of a start RB (e.g., start PRB) of the bandwidth part and information indicating the number of RBs (e.g., PRBs) constituting the bandwidth part. At least one bandwidth part among the bandwidth part(s) configured in the terminal may be activated. For example, within one carrier, one uplink bandwidth part and one downlink bandwidth part may be activated respectively. In a time division duplex (TDD) based communication system, a pair of an uplink bandwidth part and a downlink bandwidth part may be activated. The base station may configure a plurality of bandwidth parts to the terminal within one carrier, and may switch the active bandwidth part of the terminal.

In exemplary embodiments, an RB may mean a common RB (CRB). Alternatively, an RB may mean a PRB or a virtual RB (VRB). In the NR communication system, a CRB may refer to an RB constituting a set of consecutive RBs (e.g., common RB grid) based on a reference frequency (e.g., point A). Carriers, bandwidth part, and the like may be arranged on the common RB grid. That is, a carrier, bandwidth part, etc. may be composed of CRB(s). An RB or CRB constituting a bandwidth part may be referred to as a PRB, and a CRB index within the bandwidth part may be appropriately converted into a PRB index. In an exemplary embodiment, an RB may refer to an interlace RB (IRB).

A minimum resource unit constituting a PDCCH may be a resource element group (REG). An REG may be composed of one PRB (e.g., 12 subcarriers) in the frequency domain and one OFDM symbol in the time domain. Thus, one REG may include 12 resource elements (REs). A demodulation reference signal (DMRS) for demodulating a PDCCH may be mapped to 3 REs among 12 REs constituting the REG, and control information (e.g., modulated DCI) may be mapped to the remaining 9 REs.

One PDCCH candidate may be composed of one CCE or aggregated CCEs. One CCE may be composed of a plurality of REGs. The NR communication system may support CCE aggregation levels 1, 2, 4, 8, 16, and the like, and one CCE may consist of six REGs.

A control resource set (CORESET) may be a resource region in which the terminal performs a blind decoding on PDCCHs. The CORESET may be composed of a plurality of REGs. The CORESET may consist of one or more PRBs in the frequency domain and one or more symbols (e.g., OFDM symbols) in the time domain. The symbols constituting one CORESET may be consecutive in the time domain. The PRBs constituting one CORESET may be consecutive or non-consecutive in the frequency domain. One DCI (e.g., one PDCCH) may be transmitted within one CORESET. A plurality of CORESETs may be configured with respect to a cell and a terminal, and the plurality of CORESETs may overlap in time-frequency resources.

A CORESET may be configured in the terminal by a PBCH (e.g., system information or a master information block (MIB) transmitted on the PBCH). The identifier (ID) of the CORESET configured by the PBCH may be 0. That is, the CORESET configured by the PBCH may be referred to as a CORESET #0. A terminal operating in an RRC idle state may perform a monitoring operation in the CORESET #0 in order to receive a first PDCCH in the initial access procedure. Not only terminals operating in the RRC idle state but also terminals operating in the RRC connected state may perform monitoring operations in the CORESET #0. The CORESET may be configured in the terminal by other system information (e.g., system information block type 1 (SIB1)) other than the system information transmitted through the PBCH. For example, for reception of a random access response (or Msg2) in a random access procedure, the terminal may receive the SIB1 including the configuration information of the CORESET. Also, the CORESET may be configured in the terminal by terminal-specific higher layer signaling (e.g., RRC signaling).

In each downlink bandwidth part, one or more CORESETs may be configured for the terminal. The terminal may monitor PDCCH candidate(s) for the CORESET configured in the downlink active bandwidth part. Alternatively, the terminal may monitor PDCCH candidate(s) for a CORESET (e.g., CORESET #0) configured in a downlink bandwidth part other than the downlink active bandwidth part. The initial downlink active bandwidth part may include the CORESET #0 and may be associated with the CORESET #0. The CORESET #0 having a quasi-co-location (QCL) relation with an SS/PBCH block may be configured for the terminal in a primary cell (PCell), a secondary cell (SCell), and a primary secondary cell (PSCell). In the secondary cell (SCell), the CORESET #0 may not be configured for the terminal.

A synchronization signal/physical broadcast channel (SS/PBCH) block may be referred to as a synchronization signal block (SSB). In other words, SS/PBCH block and SSB may be used with the same meaning. In the present disclosure, an SSB may mean a set of signal(s) and/or channel(s) including synchronization signal(s). For example, an SSB may include a primary synchronization signal (PSS) and/or a secondary synchronization signal (SSS). The SSB may further include a PBCH, a DM-RS for decoding the PBCH, a CSI-RS, and the like. SSBs may be transmitted periodically and repeatedly, and the SSB may be transmitted more than once within one period. When a plurality of SSBs are transmitted in a plurality of SSB resources, the SSBs may correspond to different beams.

A search space may be a set of PDCCH candidate(s) or a set of resource regions occupied by the PDCCH candidate(s). The terminal may perform a blind decoding on each of the PDCCH candidates within a predefined search space. The terminal may determine whether a PDCCH is transmitted to itself by performing a cyclic redundancy check (CRC) on a result of the blind decoding. When it is determined that a PDCCH is a PDCCH for the terminal itself, the terminal may receive the PDCCH. The terminal may periodically monitor the search space, and may monitor the search space at one or more time positions (e.g., PDCCH monitoring occasions, CORESET) within one period.

A PDCCH candidate may be configured with CCEs selected by a predefined hash function within an occasion of the CORESET or the search space. The search space may be defined and configured for each CCE aggregation level. In this case, a set of search spaces for all CCE aggregation levels may be referred to as a 'search space set'. In exemplary embodiments, 'search space' may mean 'search space set', and 'search space set' may mean 'search space'.

A search space set may be logically associated with or correspond to one CORESET. One CORESET may be logically associated with or correspond to one or more search space sets. A search space set for transmitting a common DCI or a group common DCI may be referred to as a common search space set (hereinafter, referred to as a 'CSS set'). The common DCI or the group common DCI may include at least one of resource allocation information of a PDSCH for transmission of system information, paging, a power control command, SFI, or a preemption indicator. In the case of the NR communication system, the common DCI may correspond to DCI formats 0_0, 1_0, etc., and a cyclic redundancy check (CRC) of the common DCI may be scrambled by a system information-radio network temporary identifier (SI-RNTI), paging-RNTI (P-RNTI), random access-RNTI (RA-RNTI), temporary cell-RNTI (TC-RNTI), or the like. The group common DCI may correspond to a DCI format 2_X (X=0, 1, 2, ...), or the like, and a CRC of the group common DCI may be scrambled by a slot format indicator-RNTI (SFI-RNTI) or the like. The CSS set may include Type 0, Type 0A, Type 1, Type 2, and Type 3 CSS sets.

A search space set for transmitting a UE-specific DCI may be referred to as a UE-specific search space set (hereinafter, referred to as a 'USS set'). The UE-specific DCI may include scheduling and resource allocation information for a PDSCH, PUSCH, PSSCH, or the like. In the case of the NR communication system, the UE-specific DCI may correspond to DCI formats 0_1, 0_2, 1_1, 1_2, 3_0, 3_1, or the like, and a CRC of the UE-specific DCI may be scrambled by a C-RNTI, configured scheduling-RNTI (CS-RNTI), modulation and coding scheme-C-RNTI (MCS-C-RNTI), or the like. The UE-specific DCI including the scrambled CRC may be transmitted. In consideration of scheduling freedom or fallback transmission, a UE-specific DCI may be transmitted even in a CSS set. In this case, the UE-specific DCI may be transmitted according to the DCI format corresponding to the common DCI. For example, the terminal may monitor a PDCCH (e.g., DCI formats 0_0, 0_1) whose CRC is scrambled with a C-RNTI, CS-RNTI, MCS-C-RNTI, or the like in the CSS set.

The Type 0 CSS set may be used for receiving a DCI scheduling a PDSCH including an SIB1, and may be configured through a PBCH or cell-specific RRC signaling. The ID of the Type 0 CSS set may be assigned as or set to 0. The type 0 CSS set may be logically combined with the CORESET #0.

The terminal may assume that a PDCCH DM-RS has a QCL relationship with a certain signal (e.g., SS/PBCH block, CSI-RS, PDSCH DM-RS, PDCCH DM-RS, or the like). In addition, since a PDCCH has the same antenna port as a corresponding PDCCH DM-RS, the PDCCH and the PDCCH DM-RS may have a QCL relationship with each other. Therefore, the terminal may acquire information on large-scale propagation characteristics of a radio channel experienced by the PDCCH and the PDCCH DM-RS through the QCL assumption, and may utilize the information on the large-scale propagation characteristics for channel estimation, reception beamforming, and the like. A QCL parameter may include at least one of a delay spread, Doppler spread, Doppler shift, average gain, average delay, or spatial Rx parameter. The spatial Rx parameter may correspond to at least one characteristic of a reception beam, reception channel spatial correlation, or transmission/reception beam pair. For convenience, the spatial Rx parameter may be referred to as 'spatial QCL'. The PDCCH may be used in a sense including the PDCCH DM-RS, and an expression that the PDCCH has a QCL relationship with a certain signal may include the meaning that the PDCCH DM-RS of the PDCCH has a QCL relationship with the certain signal. A signal having a QCL relationship with the PDCCH or a resource thereof may be referred to as a QCL source, QCL source signal, QCL source resource, or the like.

PDCCHs transmitted in the same CORESET (and a search space set, PDCCH monitoring occasions, etc. corresponding thereto) may have the same QCL relationship. That is, a unit of a set for which the terminal assumes the same QCL may be a CORESET, and the QCL assumption for each of the CORESETs may be independent. In an exemplary embodiment, a QCL, QCL source, etc. of a certain CORESET may mean a QCL, QCL source, etc. of a PDCCH received through the corresponding CORESET, respectively. Exceptionally, different QCL assumptions may be applied to search space sets corresponding to one CORESET. For example, a search space set for monitoring an RA-RNTI (e.g., Type 1 CSS set) and other search space sets may have different QCL relationships.

A QCL relationship or QCL assumption (e.g., QCL source, QCL type, etc.) of a CORESET may be determined by a predefined method. For example, the terminal may assume that a PDCCH DM-RS received through a certain CORESET or a certain search space set has a QCL relationship, with respect to a predefined QCL type, with an SS/PBCH block and/or CSI-RS selected in an initial access or random access procedure. Here, the QCL type may mean a set of one or more QCL parameter(s). Alternatively, a QCL relationship or QCL assumption (e.g., QCL source, QCL type, etc.) of a CORESET may be signaled from the base station to the terminal (e.g., through RRC signaling, medium access control (MAC) control element (CE) signaling, DCI signaling, or a combination thereof). That is, the base station may configure a transmission configuration information (TCI) state for a CORESET to the terminal. In general, the TCI state may include an ID of a signal (e.g., a QCL source or QCL source resource of a PDCCH DM-RS) having a QCL relationship with a DM-RS (e.g., the PDCCH DM-RS) of a physical channel to which the TCI is applied, and/or at least one QCL type thereof. For example, the base station may configure one or more TCI state candidates for each CORESET to the terminal through RRC signaling, and may indicate or configure one TCI state to be used for CORESET monitoring of the terminal from among the one or more TCI state candidates to the terminal through MAC signaling (or DCI) signaling). When there is one TCI state candidate configured by RRC signaling, the MAC signaling procedure (or DCI signaling procedure) may be omitted. The terminal may perform PDCCH monitoring and reception operations for the corresponding CORESET based on the TCI state configuration information received from the base station.

In the present disclosure, a TCI state may be referred to as a TCI. In addition, a TCI may generally refer to a broad concept including a beam or signaling information corresponding to the TCI. For convenience, in the present disclosure, a TCI may be used as a meaning corresponding to a beam. A downlink TCI or a TCI for downlink signal reception may correspond to a reception beam (e.g., reception beam of a terminal). An uplink TCI or a TCI for uplink signal transmission may correspond to a transmission beam (e.g., transmission beam of a terminal). A transmission beam may mean spatial relation information, transmission spatial filter, or the like.

Meanwhile, in a communication system, beam operations in a high-frequency band and a low-frequency band may be different. In a low-frequency band (e.g., band below 6 GHz), a signal path loss due to a channel may be relatively small, and thus signals can be transmitted and received using a beam with a wide beamwidth. Even when a control channel is transmitted using a single beam, transmission of the control channel can cover the entire coverage of a cell (or sector). In a high-frequency band (e.g., band above 6 GHz) where a signal path loss is large, beamforming using large-scale antennas can be used to extend a signal reach. The beamforming can be applied not only to data channels but also to common signals and control channels. A communication node (e.g., base station) can form a beam with a small beamwidth through a plurality of antennas, and can transmit a signal multiple times by using a plurality of beams in different directions (e.g., having different directivities) to cover the entire coverage of the cell (or sector). The operation of repeatedly transmitting a signal over a plurality of time resources using a plurality of beams may be referred to as a beam sweeping operation. A system that transmits signals using a plurality of beams with narrow beamwidths may be referred to as a multi-beam system.

The multi-beam system may operate based on beam management. The terminal may measure a beam quality of a received signal (e.g., SSB, CSI-RS, etc.) and report a beam quality measurement result to the base station. For example, the terminal may calculate a beam quality measurement value such as reference signal received power (RSRP) and signal-to-interference-plus-noise ratio (SINR) for each beam (e.g., each signal, each resource), and report optimal beam(s) determined based on the beam quality measurement values and/or measurement value(s) corresponding to the optimal beam(s) to the base station. The base station may determine a transmission beam for the terminal based on beam quality measurement information (e.g., optimal beam(s) and/or measurement value(s) corresponding to the optimal beam(s)) reported from the terminal. The base station may configure a TCI state for reception of physical signals and channels (e.g., PDCCH, PDSCH, CSI-RS, PUCCH, PUSCH, SRS, PRACH, etc.) to the terminal based on the beam quality measurement information reported by the terminal.

Multiple beams may be formed by multiple TRPs and/or panels. In the present disclosure, a TRP and a panel may be collectively referred to as 'TRP'. TRPs may be deployed based on different spatial locations, different geographic locations, different antenna shapes, and/or different boresights. Different beams (e.g., transmission beams, reception beams, transmission and reception beam pairs) may be formed in channels formed between TRPs and the terminal, respectively. The base station may perform multi-beam transmission using multiple TRPs, and a transmission reliability can be improved by a beam selection gain or beam diversity gain. The multi-TRP transmission scheme may be referred to as coordinated multipoint (CoMP) transmission. TRPs participating in multi-TRP transmission may belong to the same base station or the same serving cell. Alternatively, TRPs participating in multi-TRP transmission may belong to a plurality of base stations (e.g., different base stations) or a plurality of serving cells (e.g., different serving cells). Ideal backhaul and non-ideal backhaul may be considered as a backhaul environment between the TRPs. Joint scheduling may be difficult to apply between TRPs connected through non-ideal backhaul.

A downlink reception beam (e.g., downlink TCI) and an uplink transmission beam (e.g., uplink TCI) of the terminal may be managed, configured, and/or indicated by the base station. A TCI of a PDCCH may be configured for a CORESET corresponding to the PDCCH. The terminal may perform a PDCCH monitoring and reception operation in search space set(s), PDCCH candidate(s), etc. corresponding to the CORESET based on a TCI state included in CORESET configuration information. In the present disclosure, a signal reception operation based on a TCI may include an operation of determining and applying a reception beam, channel estimation operation, and the like. A TCI of a PDSCH may be configured or indicated separately from the TCI of the PDCCH. The TCI of the PDSCH may be included in a DCI scheduling the PDSCH, and the TCI of the PDSCH may be dynamically indicated to the terminal by the DCI. The base station may select one TCI among candidate TCI(s) of the PDSCH, which are configured or activated through higher layer signaling to the terminal, and may indicate the selected one TCI through the DCI (e.g., scheduling DCI). In multi-TRP transmission, a DCI may include a plurality of TCIs, and the terminal may receive a PDSCH using the plurality of indicated TCIs. TCI(s) of other downlink signals (e.g., CSI-RS, TRS, PRS) may be determined independently from the TCI of the PDCCH or PDSCH.

In uplink communication, a TCI (e.g., transmission spatial filter or spatial relation information) of a PUCCH may be semi-statically configured in the terminal. A TCI (e.g., transmission spatial filter or spatial relation information) of a PUSCH may be semi-statically configured in the terminal. Alternatively, a TCI of a PUSCH may be included in a DCI (e.g., scheduling DCI), and the TCI of the PUSCH may be dynamically indicated to the terminal by the DCI. A TCI of a PUSCH may be indirectly indicated by information on an SRS resource (e.g., SRS resource indication information), and the terminal may transmit the PUSCH by applying the same TCI (e.g., transmission spatial filter or spatial relation information) as a TCI configured for the SRS resource to the PUSCH. TCI(s) of other uplink signals (e.g., SRS, PRACH) may be determined independently of the TCI of the PUCCH or PUSCH.

The above-described individual beam management method for each signal or channel may provide a high degree of freedom and flexibility. However, even when it is desired to change a beam for all transmission and reception signals of the terminal at once, a signaling overhead may be large and a delay time may increase because individual signaling procedures should be applied to the respective signals. A method of indicating a TCI for a plurality of signals (specifically, physical signals and/or physical channels) to the terminal through one-time signaling may be considered. In downlink communication, the terminal may receive an indication for a downlink TCI through a DCI, and the indicated downlink TCI may be applied to both a PDCCH and PDSCH. The indicated downlink TCI may be applied to downlink signals (e.g., CSI-RS, TRS, PRS) other than the PDCCH and PDSCH. In uplink communication, the terminal may receive an indication for an uplink TCI through a DCI, and the indicated uplink TCI may be applied to both a PUCCH and PUSCH. The indicated uplink TCI may be applied to uplink signals (e.g., SRS, PRACH) other than the PUCCH and PUSCH. A downlink TCI and an uplink TCI may be individually indicated through different DCIs. Alternatively, a downlink TCI and an uplink TCI may be indicated together by the same DCI. The downlink TCI and the uplink TCI may match. In this case, the TCI may be referred to as 'joint TCI'. A joint TCI may be indicated to the terminal through a DCI. The joint TCI may be applied to both the above-described downlink signals (e.g., PDCCH, PDSCH, and other signal(s)) and the above-described uplink signals (e.g., PUCCH, PUSCH, and other signal(s)). The above-described TCI may be referred to as a unified TCI, single TCI, or the like in the sense that it is equally applied to a plurality of signals (specifically, physical signals and/or physical channels).

Meanwhile, a low-power network operation technique may be considered as a way to increase energy efficiency of a communication system. The network may reduce a transmission frequency, number of transmissions, transmission resources, etc. of periodic signals in a serving cell to increase an operation time in a dormant mode or low-power mode. The network may perform adaptive ON/OFF operation, adaptive activation/deactivation operation, and/or adaptive switching operation between a dormant mode and a non-dormant mode for some components of the network depending on the number of terminals in a serving cell, traffic situation, etc. to reduce power consumption. The some components of the network (e.g., components to which adaptive ON/OFF operation is applied) may include a serving cell, carrier, TRP, antenna element(s), radio frequency (RF) chain, transceiver unit (TXRU), and the like.

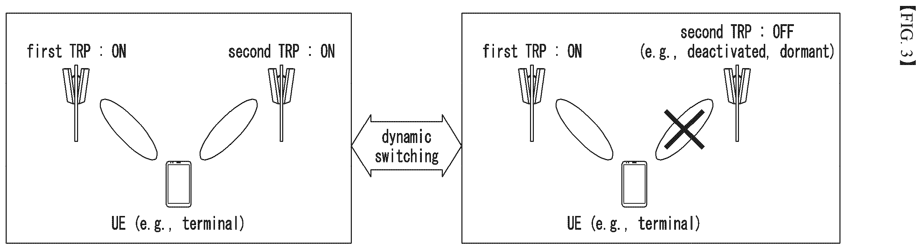

FIG. 3 is a conceptual diagram of a dynamic ON/OFF method for TRP(s).

Referring to FIG. 3, a base station may perform communication with a terminal using two TRPs. The base station may be connected to the two TRPs. The terminal may explicitly receive configuration information for the two TRPs associated with the base station from the base station. Alternatively, the terminal may receive configuration information implying the two TRPs or configuration information corresponding to the two TRPs. For example, the terminal may receive configuration information of two CORESET pools from the base station, and each CORESET pool may correspond to each TRP. As another example, the terminal may receive configuration or indication for two TCIs (or TCI states) for transmission and reception of data channel(s), and each TCI may correspond to each TRP. In other words, a QCL source signal of each TCI may be transmitted from each TRP. The base station may dynamically switch an ON/OFF state of a specific TRP. For example, the base station may dynamically switch a state of a second TRP from the ON state to the OFF state. Alternatively, the base station may dynamically switch the state of the second TRP from the OFF state to the ON state. The base station may inform the terminal of information on the ON/OFF state of the second TRP, switching information of the ON/OFF state, etc. through a signaling procedure. The terminal may receive information on the ON/OFF state of the second TRP, switching information of the ON/OFF state, etc. through the signaling procedure. The terminal may stop or minimize communication with the second TRP while the second TRP operates in the OFF state. By using the above-described method, the base station can operate communication functions of the TRPs only in a required time period, thereby increasing energy efficiency of the network.

The OFF state of a TRP may be defined in various forms. In the present disclosure, a TRP in the OFF state may be referred to as an off TRP, and a TRP in the ON state may be referred to as an on TRP. For example, an off TRP may not transmit or receive any signals. Alternatively, an off TRP may perform only downlink transmission operations or only uplink reception operations. As another example, an off TRP may transmit or receive only some signals. The some signals may be downlink signals that support initial access of the terminal, radio resource management (RRM) measurement, beam quality measurement, discovery of a serving cell or TRP, and/or the like. The some signals may include SSB, discovery signal, system information, and/or the like. Alternatively, the some signals may include a scheduling signal or channel (e.g., PDSCH, PDCCH), CSI-RS, positioning reference signal (PRS), tracking reference signal (TRS), and/or the like. Alternatively, the some signals may be uplink signals that support signal measurement of the base station, terminal discovery, and/or the like. The some signals may include SRS, PRACH, and/or the like. In the above-mentioned sense, the OFF state of the TRP may also be referred to as an deactivated state, a dormant state, or the like. The ON state of the TRP may also be referred to as an activated state, a non-dormant state, or the like. In the present disclosure, the state supporting the above-described operations of the TRP may be collectively referred to as 'OFF state' or 'OFF mode'. A state opposite to the OFF state of the TRP may be collectively referred to as 'ON state' or 'ON mode'.

The ON/OFF state of the TRP may be defined from the terminal perspective. For example, a TRP may be configured or indicated to be in the OFF state with respect to a specific terminal or terminal group. In this case, the specific terminal or terminal group may expect the TRP to perform an operation in the OFF state and may perform an operation corresponding to the OFF state. The TRP may operate in the OFF state during a time period in which communication with the terminal or terminal group is defined or configured. The time period in which the TRP operates in the OFF state may be referred to as an 'OFF time period (e.g., OFF duration)'. The TRP may not necessarily operate in the OFF state in time periods other than the OFF time period. For example, the TRP may perform a communication operation, sensing operation, etc. with other communication nodes (e.g., other terminals, other terminal groups, other base stations, etc.) in time periods other than the OFF time period.

Hereinafter, specific operation methods of a base station and a terminal to support dynamic ON/OFF operations of TRP(s) will be described.

An ON/OFF switching operation of a TRP may correspond to an ON/OFF operation of a TCI (e.g., downlink reception beam or uplink transmission beam) corresponding to the TRP from the terminal's operation perspective. Similarly to the ON/OFF of the TRP described above, an ON/OFF operation (e.g., ON/OFF state) of the TCI may be referred to as an activation/deactivation operation of the TCI (e.g., activated/deactivated state), a dormant/non-dormant operation of the TCI (or dormant/non-dormant state), or the like. The above-mentioned terms (e.g., activation/deactivation, dormant/non-dormant) may be collectively referred to as 'ON/OFF'. A method for a base station to control an operation of turning on or off a TCI of a terminal or terminal group, and a transmission operation of the base station and/or terminal corresponding to the method will be described.

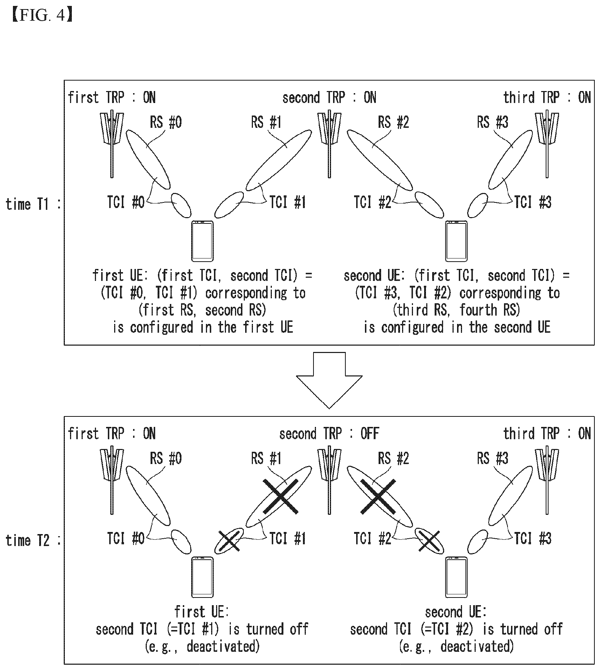

FIG. 4 is a conceptual diagram illustrating a first exemplary embodiment of a TCI ON/OFF indication method.

Referring to FIG. 4, a base station may perform communication with a terminal using three TRPs. Terminals may communicate with different TRP sets. A TRP set may include one or more TRPs. A first terminal may communicate with a first TRP and a second TRP, and a second terminal may communicate with the second TRP and a third TRP. The communication between the terminal and TRPs may be performed based on TCI(s). For example, the terminal may receive configuration or indication for one or more TCIs from the base station for transmission and reception of signal, data channel, and/or control channel. Communication between the terminal and the base station may be performed through a link of 'terminal-TRP-base station'. For example, a signal/channel transmitted from the terminal to the base station may be received at the base station through TRP(s) associated with the base station. A signal/channel transmitted from the base station to the terminal may be transmitted through one or more TRPs associated with the base station, and the terminal may receive the signal/channel of the base station from the one or more TRPs. In the present disclosure, 'configuration' may include both configuration (or indication) by semi-static signaling (e.g., RRC) and configuration (or indication) by dynamic signaling (e.g., MAC CE, DCI). The TCI(s) configured in the terminal may be the unified TCI described above. Alternatively, the TCI(s) configured in the terminal may be TCIs configured individually for the respective physical signals and channels as described above.

The first terminal (e.g., first UE) may receive configuration for two TCIs (e.g., TCI #0 and TCI #1) from the base station (e.g., TRP(s)) for the above-described purpose. A QCL source signal of the TCI #0 may be a reference signal (RS) #0, and the RS #0 may be transmitted from the first TRP of the base station. The RS #0 may be referred to as a first RS. A QCL source signal of the TCI #1 may be an RS #1, and the RS #1 may be transmitted from the second TRP of the base station. The RS #1 may be referred to as a second RS. The second terminal may receive configuration for two TCIs (e.g., TCI #2 and TCI #3) from the base station (e.g., TRP(s)) for the above-described purpose. A QCL source signal of the TCI #2 may be an RS #2, and the RS #2 may be transmitted from the second TRP of the base station. The RS #2 may mean a fourth RS. A QCL source signal of the TCI #3 may be an RS #3, and the RS #3 may be transmitted from the third TRP of the base station. The RS #3 may be referred to as a third RS. The TCIs may be downlink TCIs. The QCL source signal may refer to a downlink signal (e.g., RS, CSI-RS, SSB, TRS, etc.) that serves as a reference for assuming specific QCL type(s).

An order may be defined among the TCIs configured in the terminal. In other words, the two TCIs configured in the first terminal may be configured to include a first TCI and a second TCI, and the TCI #0 and TCI #1 may correspond to the first TCI and the second TCI, respectively. The two TCIs configured in the second terminal may be configured to include a first TCI and a second TCI, and the TCI #3 and TCI #2 may correspond to the first TCI and the second TCI, respectively. The concept of the order among the TCIs may be valid even when one TCI is configured in the terminal. For example, a third terminal may receive configuration for one TCI (e.g., TCI #4). In this case, the configured TCI may be a first TCI or a second TCI. One TCI of the third terminal may be configured in a form of (first TCI, second TCI)=(TCI #4, none) or (first TCI, second TCI)=(none, TCI #4). The terminal may determine the order of the TCI(s) based on an order or location in which information of the TCI(s) is mapped to a signaling message transmitted to the terminal, the name of the signaling message, or the like.

An ON/OFF state of a TRP of the base station may be dynamically switched. Referring to FIG. 4, all three TRPs may operate in the ON state at a time T1. In this case, the first terminal and the second terminal may perform signal transmission and reception operations with one or more TRPs based on the configured TCIs. At a time T2, the first TRP and the third TRP may operate in the ON state, and the state of the second TRP may be switched to the OFF state. Signals (e.g., RS #1 and RS #2) of the second TRP that is in the OFF state may not be transmitted for at least a predetermined time. The second TRP in the OFF state may not transmit signals/channels (e.g., PDCCH, PDSCH, CSI-RS, TRS, PUCCH, PUSCH, SRS, etc.) having a QCL relationship with the RS #1 and RS #2 for at least a predetermined time.

Accordingly, the base station may indicate the first terminal not to perform a reception operation based on the TCI #1. As a method for the above indication, the base station may indicate the first terminal to switch the state of TCI #1 to 'OFF state', 'deactivated state', 'dormant state', or 'disable state'. Alternatively, the base station may indicate the first terminal not to use the TCI #1. The first terminal may skip or stop a downlink reception operation and/or uplink transmission operation based on the TCI #1 according to the above indication. In other words, the first terminal may not perform a downlink reception operation and/or an uplink transmission operation based on the TCI #1. The base station may indicate the second terminal to switch the state of TCI #2 to 'OFF state', 'deactivated state', 'dormant state', or 'disable state'. Alternatively, the base station may indicate the second terminal not to use the TCI #2. The second terminal may skip or stop a downlink reception operation and/or uplink transmission operation based on the TCI #2 according to the above indication. In other words, the second terminal may not perform a downlink reception operation and/or an uplink transmission operation based on the TCI #2.

To indicate the OFF state of the TCI, the base station may transmit a signaling message to each terminal. The signaling message may include a TCI ON/OFF indication. For example, the base station may transmit a DCI to each of the first terminal and the second terminal. In other words, the base station may indicate the OFF state of the TCI to each of the first and second terminals by respectively transmitting independent DCIs to the first and second terminals. In a first exemplary embodiment, the first terminal may receive the DCI indicating to turn off the TCI #1, and the second terminal may receive the DCI indicating to turn off the TCI #2. The DCI indicating to turn off the TCI #1 may be transmitted through a TRP in which the TCI #1 is configured. The DCI indicating to turn off the TCI #2 may be transmitted through a TRP in which the TCI #2 is configured. The DCI indicating to turn off the TCI #1 and the DCI indicating to turn off the TCI #2 may be different DCIs. The DCI (e.g., DCI indicating to turn off the TCI) may be a DCI including UE-specific control information, a DCI with a CRC scrambled by a UE-specific RNTI (e.g., C-RNTI, CS-RNTI), a DCI that schedules a data channel, or a DCI transmitted through a USS (or USS set). According to the above-described method, since a control signal needs to be transmitted to each terminal to turn off one TRP, if multiple terminals are connected to the TRP, signaling overhead may be large and delay time may increase.

As a method to solve the above-described problem, a method of transmitting a common signaling message to a terminal group to indicate to turn off a TCI may be used. The terminal group to which the common signaling is applied may be all or some terminals to which a TRP to be switched on or off or a TCI corresponding to the TRP is applied. The terminal group to which the common signaling is applied (e.g., terminal(s) belonging to the terminal group) may be determined by the base station. The terminal group may include one or more terminal(s).

For example, the TCI ON/OFF indication may be included in a group common DCI, and the base station (e.g., one or more TRPs associated with the base station) may transmit the group common DCI to the terminal group. The terminal(s) belonging to the terminal group may receive the group common DCI and identify the TCI ON/OFF indication included in the group common DCI. The TCI ON/OFF indication may indicate that the TCI state is in the ON state or OFF state. The TCI ON/OFF indication indicating that the TCI state is in the ON state may be referred to as a TCI ON indication. The TCI ON/OFF indication indicating that the TCI state is in the OFF state may be referred to as a TCI OFF indication. The terminal may identify the TCI indicated to be in the ON state and/or the TCI indicated to be in the OFF state based on the TCI ON/OFF indication. The group common DCI may be transmitted on a group common PDCCH. The group common DCI may be transmitted through a specific search space set. For example, the terminal may monitor the group common DCI for TCI ON/OFF indication in a Type 3 CSS set. The group common DCI may include information indicating operations (e.g., slot format configuration) other than the TCI ON/OFF operation. Alternatively, the group common DCI may be a unique DCI for indicating the TCI ON/OFF operation. To support the above-described operation, a new DCI format (e.g., DCI format 2_X, 3_X, etc) may be used, and a new group common RNTI may be applied to the new DCI format. X may be a natural number.

As described above, a TCI corresponding to a TRP to be switched on or off may be different for each terminal. A method in which the base station indicates a TCI of each terminal by referring to a TCI index assigned to each terminal may increase a DCI payload size. It may be difficult to regard the message for the above indication as a common message for a terminal group. In an efficient manner, the base station may indicate TCIs (e.g., TCI indexes) with a specific order to a terminal group through a DCI, and the operation of switching on or off the TRPs may be performed based on the TCIs having the specific order. In other words, the base station may indicate the terminal group to apply the ON or OFF states to the respective TRPs by transmitting the DCI including TCIs with the specific order to the terminal group. The above-described method may be referred to as (Method 100).

The exemplary embodiment of FIG. 4 may be performed by (Method 100). To turn off the second TRP, the base station may indicate the first terminal to turn off the TCI #1 associated with the second TRP and may indicate the second terminal to turn off the TCI #2 associated with the second TRP. In this case, the base station may indicate the first terminal and the second terminal to regard the second TCI as in the OFF state by transmitting a common DCI (e.g., group common DCI). The second TCI of the first terminal may be the TCI #1, and the second TCI of the second terminal may be the TCI #2. The first terminal and the second terminal may receive the DCI (e.g., common DCI, group common DCI) based on a common RNTI. Based on the indication according to the DCI, the first terminal may turn off the TCI #1, which is its second TCI, and the second terminal may turn off the TCI #2, which is its second TCI. Additionally or alternatively to the above-described operation, the base station may indicate the first terminal and the second terminal to regard the first TCI as in the ON state by transmitting a common DCI (e.g., group common DCI). The first TCI of the first terminal may be the TCI #0, and the first TCI of the second terminal may be the TCI #3. Based on the indication according to the DCI, the first terminal may maintain the TCI #0, which is its first TCI, to be in the ON state, and the second terminal may maintain the TCI #3, which is its first TCI, to be in the ON state. The information indicating to apply the first TCI in the ON state and the information indicating to apply the second TCI in the OFF state may be included in the same DCI. Alternatively, the information indicating to apply the first TCI in the ON state and the information indicating to apply the second TCI in the OFF state may be included in different DCIs. According to the above-described operations, the first terminal may stop all or part of communication with the second TRP while maintaining communication with the first TRP, and the second terminal may stop all or part of communication with the second TRP while maintaining communication with the third TRP. According to the above-described method, the TCI of each terminal may be maintained/switched to the ON state or OFF state based on common control information transmitted through the common signal. Therefore, the signaling overhead required for the TRP ON/OFF indication can be reduced. In the present disclosure, the case of considering at most two TCIs is merely an example, and the above-described method may be used in the same or similar manner even when three or more TCIs are applied to the terminal.

The above-described TCI ON/OFF indication method may be applied separately to a downlink TCI and an uplink TCI. In other words, the base station may transmit ON/OFF indication information (e.g., ON/OFF state information) for the downlink TCI and/or ON/OFF indication information (e.g., ON/OFF state information) for the uplink TCI through a DCI. Alternatively, the above-described TCI ON/OFF indication method may be applied simultaneously to a downlink TCI and an uplink TCI. In other words, the terminal may jointly determine the ON/OFF states of the downlink TCI and the uplink TCI based on a single TCI ON/OFF indication.

The group common DCI may include a plurality of TCI ON/OFF indication information. The plurality of TCI ON/OFF indication information may be mapped to a plurality of fields in the group common DCI, respectively. Alternatively, a plurality of TCI ON/OFF indication information may be mapped to a plurality of blocks constituting a field in the group common DCI, respectively. The plurality of TCI ON/OFF indication information may be transmitted for different terminals or different terminal groups. Additionally or alternatively to the above-described operation, one terminal may receive a plurality of TCI ON/OFF indication information included in one group common DCI, and perform TCI-related operations based on the plurality of TCI ON/OFF indication information. For example, the terminal may obtain first TCI ON/OFF indication information and second TCI ON/OFF indication information mapped to different fields or different blocks within one group common DCI. For example, the first TCI ON/OFF indication information and the second TCI ON/OFF indication information may be information indicating TCI-related operations for different transmission directions (e.g., uplink and downlink). For another example, the first TCI ON/OFF indication information and the second TCI ON/OFF indication information may be information indicating TCI-related operations for different serving cells for a terminal in which carrier aggregation is configured. In other words, the base station may control TCI-related operations for a plurality of serving cells configured in the terminal through one DCI.

When the terminal receives an indication to regard a certain TCI as in the OFF state, the terminal may not perform a transmission operation, a reception operation, and/or a measurement operation of signals associated (or linked) with the TCI at least while the TCI is in the OFF state. When the terminal receives an indication to regard a certain TCI as in the ON state, the terminal may perform a transmission operation, a reception operation, and/or a measurement operation of signals associated (or linked) with the TCI at least while the TCI is in the ON state. The signals associated with the TCI may refer to physical signals and channels configured to perform a transmission operation, a reception operation, and/or a measurement operation based on a QCL relationship according to the TCI (e.g., TCI state information). The physical signals and channels (e.g., signals associated with the TCI) may be predefined in technical specifications. The signals associated with the downlink TCI may include at least one of SSB, PDCCH, PDSCH, CSI-RS, TRS, PRS, or PT-RS. The signals associated with the uplink TCI may include at least one of PRACH, PUCCH, PUSCH, or SRS. The signals associated with the TCI (e.g., downlink TCI and/or uplink TCI) may be signals configured to be transmitted and received using one TCI.

The signals associated with the TCI (e.g., downlink TCI and/or uplink TCI) may be signals configured to be received using a plurality of TCIs. For example, the signals associated with the TCI may include a PDSCH transmitted in a scheme of spatial division multiplexing (SDM), frequency division multiplexing (FDM), and/or time division multiplexing (TDM) based on the plurality of TCIs, a PDCCH repeatedly transmitted based on the plurality of TCIs, and/or a PDCCH (or PDSCH) transmitted in a single frequency network (SFN) scheme based on the plurality of TCIs. The signals associated with the TCI may include a CSI-RS. For example, one CSI-RS resource set may include a plurality of CSI-RS resources, and reception operations in the respective plurality of CSI-RS resources may be performed based on different TCIs. When some TCIs among the plurality of TCIs configured for the signals are indicated to be in the OFF state, the terminal may receive the signals based on the remaining TCI(s) (i.e. TCI(s) in the ON state). For example, after the signal is configured or scheduled in the terminal to be received based on the first TCI and the second TCI, the terminal may receive from the base station an indication to switch the second TCI to be in the OFF state or an indication to regard the second TCI as in the OFF state. In this case, if the remaining TCI, the first TCI, is still in the ON state, the terminal may receive the signal based on the first TCI. In other words, if some of the TCIs configured in the terminal are switched to the OFF state, multi-TCI-based transmission may be switched (e.g., fallback) to a single TCI-based transmission. Alternatively, if the TCI(s) configured for a downlink reception operation includes at least one TCI in the OFF state, the terminal may skip the downlink reception operation.

The signals associated with the TCI may be signals configured to be transmitted using a plurality of TCIs. For example, the signals associated with the TCI may be a PUSCH or PUCCH transmitted in the SDM, FDM, and/or TDM scheme based on the plurality of TCIs, a PUCCH or PUSCH transmitted in the SFN scheme based on the plurality of TCIs, an SRS transmitted in a plurality of time resources based on the plurality of TCIs, or the like. If some TCIs among the plurality of TCIs configured for the signals are indicated to be in the OFF state, the terminal may transmit the signals based on the remaining TCI(s) (e.g., TCI(s) in the ON state). For example, after the signal is configured or scheduled in the terminal to be transmitted based on the first TCI and the second TCI, the terminal may receive from the base station an indication to switch the second TCI to be in the OFF state or an indication to regard the second TCI as in the OFF state. In this case, if the remaining TCI, the first TCI, is still in the ON state, the terminal may transmit the signal based on the first TCI. Alternatively, if the TCI(s) configured for an uplink transmission operation includes at least one TCI in the OFF state, the terminal may skip the uplink transmission operation.

The above-described operation (e.g., an operation of skipping downlink reception or uplink transmission, an operation of switching multi-TCI-based transmission to single TCI-based transmission) may be valid only when the terminal receives a DCI including TCI ON/OFF indication sufficiently earlier than a start time of the downlink reception or the uplink transmission. The above-described operation may be applied only when a certain one symbol (e.g., the last symbol) at which the DCI including the TCI ON/OFF indication is received is earlier by at least S symbols (or at least S slots) than a certain one symbol (e.g., the first symbol) in which the downlink reception or uplink transmission is performed. S may be a natural number. S may be predefined in technical specifications. Alternatively, the base station may inform S to the terminal through a signaling procedure.

Meanwhile, for multi-TRP transmission, the terminal may receive configuration for a plurality of CORESET pools. Each CORESET pool may correspond to each TRP. For example, the terminal may receive configuration for a first CORESET pool and a second CORESET pool, and each CORESET pool may include one or more CORESET(s). Alternatively, for some purposes, a specific CORESET pool may be configured as an empty CORESET pool that does not include CORESETs. A TCI for PDCCH monitoring may be configured for each CORESET pool. In other words, CORESETs belonging to the same CORESET pool may be monitored based on the same TCI. One TCI may be configured for each CORESET pool. Alternatively, a plurality of TCIs may be configured for a certain CORESET pool. In this case, a PDCCH may be transmitted based on the SFN scheme in the CORESET pool, and the terminal may monitor the PDCCH using all of the plurality of TCIs.

According to an exemplary embodiment, the terminal may receive configuration for a first TCI for PDCCH monitoring in the first CORESET pool and configuration for a second TCI for PDCCH monitoring in the second CORESET pool. In this case, the second TCI may be switched to the OFF state by (Method 100). The terminal may not monitor the CORESET (e.g., the second CORESET pool) associated with the second TCI indicated to be in the OFF state, at least while the second TCI is in the OFF state. Specifically, the terminal may skip blind decoding for PDCCH candidate(s) belonging to search space set(s) constituting the second CORESET pool. The terminal may skip transmission and reception operations of downlink signals associated with the second CORESET pool (e.g., PDSCH, PDCCH, CSI-RS, etc. allocated by a PDCCH transmitted in the second CORESET pool), uplink signals associated with the second CORESET pool (e.g., PUSCH, PUCCH, SRS, etc. allocated by a PDCCH transmitted in the second CORESET pool). When a plurality of TCIs for a downlink signal or an uplink signal associated with the second CORESET pool are configured, and some TCIs among the plurality of TCIs are indicated to be in the OFF state, transmission of the downlink signal or the uplink signal may be skipped, or transmission of the downlink signal or the uplink signal may be performed based on the remaining TCI(s) in the ON state.

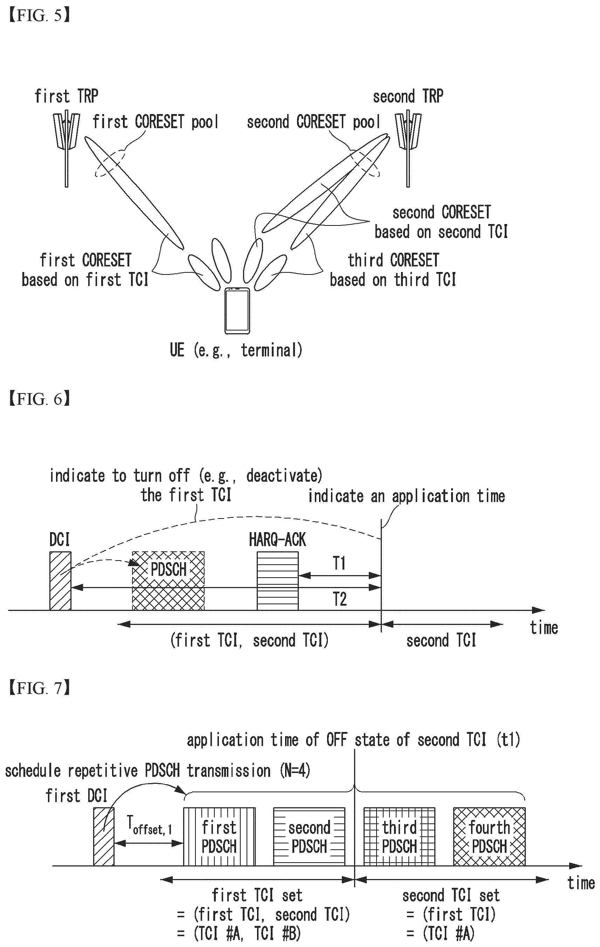

FIG. 5 is a conceptual diagram illustrating a second exemplary embodiment of a TCI ON/OFF indication method.

Referring to FIG. 5, for multi-TRP transmission, the terminal may receive configuration for a plurality of CORESET pools from the base station (e.g., TRP(s)). Each CORESET pool may correspond to each TRP. For example, the terminal may receive configuration for a first CORESET pool and a second CORESET pool, and each CORESET pool may include one or more CORESET(s). A first TCI may be configured for the first CORESET pool configured in the terminal, and a second TCI and a third TCI may be configured for the second CORESET pool configured in the terminal. For example, a first CORESET and a second CORESET belonging to the second CORESET pool may be monitored based on the second TCI and the third TCI, respectively. In this case, the second TCI may be switched to the OFF state by (Method 100). The terminal may not monitor CORESET(s) (e.g., all CORESET(s) (or all search space set(s)) included in the second CORESET pool) associated with the second TCI indicated to be in the OFF state at least while the second TCI is in the OFF state. In other words, when at least one TCI among TCI(s) applied to a certain CORESET pool is indicated to be in the OFF state, the terminal may not monitor CORESET(s) (e.g., CORESET pool) for which the at least one TCI in the OFF state is configured. When the third TCI is in the ON state, the terminal may not monitor CORESET(s) (or search space set(s)) based on the second TCI in the OFF state among the CORESET(s) (or search space set(s)) included in the second CORESET pool, and may monitor CORESET(s) (or search space set(s)) based on the third TCI in the ON state among the CORESET(s) (or search space set(s)) included in second CORESET. In other words, the terminal may monitor only some PDCCH candidates constituting the CORESET pool according to the TCI ON/OFF indication. Alternatively, when the third TCI is in the ON state, the terminal may monitor all CORESET(s) (or all search space set(s)) constituting the second CORESET pool based on the third TCI.

When a plurality of CORESET pools are configured in the terminal, TCI ON/OFF indication may be performed by an implicit method. For example, the base station may transmit an ON/OFF indication (e.g., indication of activation or deactivation, indication of a dormant mode or a non-dormant mode) for a CORESET pool to the terminal. The ON/OFF indication for the CORESET pool may be included in a DCI (e.g., group common DCI). The group common DCI may be transmitted to a terminal group including one or more terminals. The terminal group may include all terminals in which a CORESET pool indicated to be in the OFF state (or ON state) is configured. In other words, the terminal group may include all terminals connected to a TRP for which the CORESET pool indicated to be in the OFF state (or ON state) is configured. If a specific CORESET pool is indicated to be in the OFF state, the terminal may not monitor the specific CORESET pool. In addition, the terminal may not perform a downlink reception operation to which the TCI applied to the CORESET pool indicated to be in the OFF state is applied equally. In addition, the terminal may not perform an uplink transmission operation to which an uplink TCI corresponding to the TCI applied to the CORESET pool indicated to be in the OFF state is applied. When TCIs for downlink reception or uplink transmission include some TCIs applied to the CORESET pool indicated to be in the OFF state, the terminal may perform the downlink reception or uplink transmission based on the remaining TCI(s). The above-described method may be referred to as (Method 110).

Referring to the above-described exemplary embodiment again, the first TCI may be configured for the first CORESET pool configured in the terminal, and the second TCI and third TCI may be configured for the second CORESET pool configured in the terminal. The first CORESET and the second CORESET belonging to the second CORESET pool may be monitored based on the second TCI and the third TCI, respectively. In this case, the terminal may receive an indication to switch the second CORESET pool to the OFF state or an indication to regard the second CORESET pool as in the OFF state by (Method 110). In this case, the terminal may not monitor all CORESET(s) (or search space set(s)) belonging to the second CORESET pool. The terminal may not perform a reception operation of a downlink signal and/or a transmission operation of an uplink signal to which all TCIs (e.g., the second TCI and the third TCI) applied to the second CORESET pool are applied. Alternatively, the terminal may perform a reception operation of a downlink signal or a transmission operation of an uplink signal based on the remaining TCI(s) excluding the TCI(s) that are in the OFF state among all the TCIs applied to the second CORESET pool.

Alternatively, the terminal may apply the ON/OFF indication to only some TCIs among the TCIs applied to the second CORESET pool. Information indicating the some TCIs may be transmitted from the base station to the terminal. Alternatively, the some TCIs may be determined based on a rule predefined in technical specifications. For example, the terminal may apply the ON/OFF indication only to TCI(s) indicated or configured as a unified TCI among the TCIs applied to the second CORESET pool, and may not apply the ON/OFF indication to a specific TCI (e.g., a TCI separately configured in addition to the unified TCI). In the above-described exemplary embodiment, the second TCI may be a unified TCI, and the third TCI may be a separately configured TCI. In this case, when the second CORESET pool is indicated to be in the OFF state, the terminal may perform a monitoring operation of a CORESET (e.g., the second CORESET) to which the third TCI is applied among CORESETs belonging to the second CORESET pool, a reception operation of a downlink signal associated with the CORESET (e.g., the second CORESET), and/or a transmission operation of an uplink signal associated with the CORESRT (e.g., the second CORESET).

In (Method 110), the DCI indicating to switch/maintain the CORESET pool to the OFF state may be transmitted in the CORESET pool (e.g., search space set belonging to the CORESET pool) that is a target of switching/maintenance to the OFF state. The DCI indicating to switch/maintain the CORESET pool to the ON state may be transmitted in a CORESET pool (e.g., search space set belonging to the CORESET pool) other than the CORESET pool that is the target of switching/maintenance to the ON state. However, as described above, a plurality of TCIs may be applied to the CORESET pool, and only some TCIs among the plurality of TCIs may be indicated in the OFF state. In this case, the DCI indicating to switch/maintain the CORESET pool to the ON state may be transmitted in CORESET(s) monitored by a TCI (e.g., TCI in the ON state) other than the TCI in the OFF state among CORESET(s) belonging to the CORESET pool. Alternatively, the DCI indicating the ON or OFF state of the CORESET pool may be transmitted in an arbitrary CORESET pool.

A TCI (or a TRP corresponding to the TCI) indicated to be in the OFF (e.g., deactivated, dormant) state by the above-described method may be regarded as continuously in the OFF (e.g., deactivated, dormant) state until being indicated to be in the ON (e.g., activated, non-dormant) state. A TCI (or a TRP corresponding to the TCI) indicated to be in the ON (e.g., activated, non-dormant) state may be regarded as continuously in the ON (e.g., activated, non-dormant) state until being indicated to be the OFF (e.g., deactivated, dormant) state. When a certain TCI is initially configured or indicated to the terminal as a unified TCI or as a TCI for a specific physical signal or channel, the TCI may be considered to be in the ON state until a separate indication for the OFF state is received. Alternatively, the base station may indicate the terminal to consider a TCI as in the OFF state for a certain time period. The time period in which the TCI is considered to be in the OFF state may be referred to as TCI off duration. The TCI off duration may be determined based on a reception time of the DCI indicating to turn off the TCI. For example, the TCI off duration may correspond to one or more slot(s), and the first slot of the TCI off duration may be determined as a slot (e.g., the first slot) that appears after X symbol(s) from the last symbol of the DCI. X may be a natural number. For another example, the TCI off duration may be configured in units of symbols. The TCI off duration may start from a symbol (e.g., the first symbol) that appears after X symbol(s) from the last symbol of the DCI. In this case, the TCI off duration may start in the middle of a slot. Information for the terminal to determine the TCI off duration may be included in the DCI along with information of indicating to turn off the TCI (e.g., TCI ON/OFF indication), and the DCI may be transmitted to the terminal. Additionally or alternatively to the above-described operation, the TCI off duration and/or candidate value(s) of the TCI off duration may be defined in technical specifications. Alternatively, the base station may inform the terminal of the TCI off duration and/or candidate value(s) of the TCI off duration using higher layer signaling (e.g., RRC signaling, MAC CE).

Among terminals that communicate with a certain TRP, only some terminals may perform multi-TRP transmission. In other words, a terminal performing single TRP transmission and a terminal performing multi-TRP transmission may coexist. For a terminal performing single TRP transmission, turning off a TRP may cause a problem. The base station may not include a terminal performing single TRP transmission in a terminal group that is to receive a DCI for TRP ON/OFF indication. A terminal performing a CA operation may perform single TRP transmission in some carriers (e.g., serving cells), and the terminal may perform a transmission operation and/or a reception operation based on one TCI in the some carriers. In this case, the above-described method may be applied to the carriers of the terminal (e.g., the carriers in which single TRP transmission is performed). In other words, the TCI in the carriers may be indicated to be in the OFF state. The DCI (e.g., group common DCI) indicating the TCI to be in the OFF state may be transmitted in the carrier (e.g., the carrier in which single TRP transmission is performed) or in another aggregated carrier. In this case, the terminal may not perform a transmission operation, reception operation, measurement operation, and/or monitoring operation associated with the TCI in the carrier. In addition to the above-described operation, the terminal may not perform a transmission operation, a reception operation, a measurement operation, and/or a monitoring operation not associated with the TCI in the carrier. The terminal may consider the carrier to be in the OFF state, deactivated state, or dormant mode.

Among terminals that communicate with a certain TRP, only some terminals may receive configuration for a plurality of CORESET pools. In other words, a terminal with only one CORESET pool configured and/or a terminal with no CORESET pool configured and a terminal with a plurality of CORESET pools configured may coexist. In this case, the former terminal and the latter terminal may belong to different groups (e.g., different terminal groups) from a DCI reception perspective. The former terminal may be a terminal with only one CORESET pool configured or a terminal with no CORESET pool configured. The latter terminal may be a terminal with a plurality CORESET pools configured. The former terminal and the latter terminal may receive different DCIs (e.g., group common DCIs) for ON/OFF indication of a TCI or CORESET pool. Alternatively, the former terminal and the latter terminal may receive the same DCI (e.g., group common DCI), and the former terminal and the latter terminal may perform different interpretations and/or applications of DCI fields and/or indications included in the same DCI. For example, the former terminal may apply a first DCI field, and the latter terminal may not apply the first DCI field. Alternatively, the former terminal and the latter terminal may receive the same DCI (e.g., group common DCI), and an ON/OFF indication field for the former terminal and an ON/OFF indication field for the latter terminal may be mapped to a payload of the same DCI as being separated. In other words, the same DCI may include the ON/OFF indication field for the former terminal and the ON/OFF indication field for the latter terminal.

FIG. 6 is a conceptual diagram illustrating a first exemplary embodiment of a TCI ON/OFF indication method by DCI.

Referring to FIG. 6, the terminal may receive a DCI from the base station and identify TCI ON/OFF indication based on the received DCI. In other words, the DCI may include information indicating to turn on or off a TCI (e.g., TCI ON/OFF indication). The terminal may receive an indication for a unified TCI. In an exemplary embodiment, the unified TCI indicated to the terminal may include a first TCI and a second TCI, and the terminal may transmit or receive signals (e.g., downlink signals and/or uplink signals) to which the TCIs are applied, based on the TCIs. In this case, the DCI may indicate the terminal to turn off or deactivate the first TCI by using the method described above. The terminal may apply the first TCI and the second TCI until an application time of the indication (e.g., TCI OFF indication), and may turn off the first TCI after the application time of the indication and apply only the second TCI to signal transmission and reception operations.

In the exemplary embodiment of FIG. 6, the application time of the TCI ON/OFF indication may be determined based on a time offset (e.g., T2) from a reception time of the DCI for the TCI ON/OFF indication. The terminal may report an HARQ-ACK for the DCI or an HARQ-ACK for a PDSCH corresponding to the DCI to the base station. In this case, the application time of the TCI ON/OFF indication may be determined based on a time offset (e.g., T1) from a transmission time of the HARQ-ACK. A PDSCH may not be scheduled by a group common DCI, and a transmission resource (e.g., PUCCH resource, PUSCH resource) of an HARQ-ACK for the group common DCI may be determined based on a location of a reception resource of the group common DCI. The application time of the TCI ON/OFF indication may be determined based on a slot boundary (e.g., a start time or end time of a certain slot). Considering the above-described operation, the application time of the TCI ON/OFF indication may be determined as the first slot (e.g., a start time of the slot or the first symbol of the slot) that appears after a predetermined number of symbols from a reference symbol (e.g., the last symbol) among transmission symbols of the HARQ-ACK. For example, T1 may mean a symbol distance between the last symbol of the HARQ-ACK and the first symbol of the slot. Alternatively, the application time of the TCI ON/OFF indication may be determined as the first slot (e.g., a start time of the slot or the first symbol of the slot) that appears after a predetermined number of symbols from a reference symbol (e.g., the last symbol) among reception symbols of the DCI. For example, T2 may refer to a symbol distance between the last symbol of DCI and the first symbol of the slot. Here, the predetermined number of symbols considered to determine the application time of TCI ON/OFF indication may be predefined in technical specifications. The predetermined number of symbols considered to determine the application time of TCI ON/OFF indication may vary depending on a subcarrier spacing, operating frequency band, and/or UE capability.

The TCI ON/OFF indication by DCI may be performed through the same DCI field (e.g., TCI indication field) of the same DCI as the TCI indication by DCI (e.g., unified TCI indication). For example, the TCI ON/OFF indication may be performed by some bit(s) of the DCI field, and the unified TCI indication may be performed by some other bit(s) of the DCI field. As another example, the TCI ON/OFF indication may be combined with the unified TCI indication. The DCI field may include one or more codepoint(s). Each codepoint may or may not include TCI index(es). If a codepoint includes TCI index(es), the terminal may regard the codepoint as indicating to switch or maintain the TCI(s) to the ON state. On the other hand, if a codepoint does not include a TCI index or if a codepoint includes information indicating no TCI index (e.g., none, empty, etc.), the terminal may regard the codepoint as indicating to switch or maintain all TCI(s) to the OFF state. In addition, if a codepoint includes index(es) of fewer TCI(s) than the number of TCIs currently maintained by the terminal, the terminal may regard the codepoint as indicating to switch some TCIs not indicated by the codepoint to the OFF state. In the above-described case, the application time of the TCI ON/OFF indication and the application time of the TCI indication (e.g., unified TCI indication) may be determined based on the same method (e.g., the method described above). The DCI may be a DCI including scheduling information of a data channel. In the NR communication system, the DCI may refer to a DCI format 0_0, 0_1, 0_2, 0_3, 1_0, 1_1, 1_2, 1_3, or the like. The DCI may be a DCI with a CRC scrambled by a UE-specific RNTI. Alternatively, the above-described TCI ON/OFF indication information and/or TCI indication information may be transmitted to the terminal through a higher layer signaling procedure (e.g., RRC signaling procedure, MAC CE signaling procedure).

The TCI ON/OFF indication and TCI indication may be performed by different DCIs. The terminal may receive the TCI ON/OFF indication information through a first DCI and receive the TCI indication information through a second DCI. In this case, the terminal may receive an indication of turning off the first TCI through the first DCI and may receive an indication of using the first TCI through the second DCI. The application time of the indication by the first DCI and the application time of the indication by the second DCI may coincide. For example, the first slot to which the indication by the first DCI is applied may coincide with the first slot to which the indication by the second DCI is applied. In the above-described case, the terminal may preferentially perform one of the two indicated operations. For example, the terminal may consider that a priority of the TCI OFF indication (or TCI ON indication) is higher than a priority of the TCI indication, and may perform an operation corresponding to the TCI OFF indication (or TCI ON indication) by the first DCI from the slot. In this case, the TCI indication by the second DCI may be ignored. Alternatively, the terminal may consider that a priority of the TCI indication is higher than a priority of the TCI OFF indication (or TCI ON indication), and may perform an operation corresponding to the TCI indication by the second DCI from the slot. In this case, the TCI OFF indication (or TCI ON indication) by the first DCI may be ignored. Alternatively, the terminal may regard the above-described case (e.g., case where the TCI ON/OFF indication and the TCI indication are received) as conflicting indications from the base station. In other words, the terminal may regard the above-described case (e.g., case where the TCI ON/OFF indication and the TCI indication are received) as an error. The terminal may ignore both the TCI OFF indication (or TCI ON indication) by the first DCI and the indication by the second DCI. Alternatively, the terminal may not expect the above-described case (e.g., case where the TCI ON/OFF indication and the TCI indication are received) to occur. In other words, the terminal may not expect to simultaneously receive an indication for applying a certain TCI and an indication for turning off (or on) the certain TCI at the same time.

A TCI in the OFF state may be switched to the ON state not only by a TCI ON indication but also by a TCI indication. For example, the terminal may receive an indication for turning off the first TCI by a first DCI including TCI ON/OFF indication information, and may switch the first TCI to the OFF state. Thereafter, the terminal may receive an indication for applying the first TCI by a second DCI including TCI indication information. The terminal may switch the first TCI to the ON state based on the indication. A time (e.g., slot) at which the first TCI is switched to the ON state may coincide with a time (e.g., slot) at which an application delay time of the TCI indication is considered. Alternatively, the terminal may ignore the TCI indication for applying the first TCI in the above-described case, and may maintain the first TCI in the OFF state. In other words, the TCI OFF indication may be considered to have a higher priority than the TCI indication regardless of when it is applied. Similarly, a TCI ON indication may be considered to have a higher priority than the TCI indication. Operations based on the above-described priorities may be applied for a predetermined time period. For example, the terminal may consider a priority of the TCI OFF indication (or TCI ON indication) as higher than the TCI indication for a certain time period from a reception time of the TCI OFF indication (or TCI ON indication) or an application of the TCI OFF indication (or TCI ON indication).

The base station may turn on or off one TRP or one TCI corresponding to the one TRP through one-time signaling (e.g., one DCI transmission) for a terminal or terminal group. Alternatively, the base station may turn on or off each of a plurality of TRPs or a plurality of TCIs corresponding to the plurality of TRPs through one-time signaling (e.g., one DCI transmission) for a terminal or terminal group. For example, according to the above-described exemplary embodiment, two TCIs (e.g., first TCI and second TCI) may be configured in the terminal, and ON/OFF states for the two TCIs may be indicated to the terminal. In this case, the states of the two TCIs may be indicated as the same state or different states. For example, the state of the first TCI of the terminal may be indicated to be the ON state, and the state of the second TCI of the terminal may be indicated to be the OFF state. Alternatively, both the states of the first TCI and the second TCI of the terminal may be indicated to be the OFF states. In other words, states of all TCIs applied to a downlink operation and/or uplink operation of the terminal may be indicated to the OFF states. The indication (e.g., TCI ON/OFF indication) may be applied only to a terminal performing carrier aggregation operations. For example, an operation of turning off all TCIs of the terminal may be performed only for a secondary cell or secondary carrier. An operation of turning off all TCIs of a terminal performing a dual connectivity operation may be performed in cells excluding a primary cell and a primary secondary cell. When ON/OFF states for a plurality of TCIs are indicated by the same signaling, application times of the ON/OFF indication for the plurality of TCIs may be the same. Alternatively, the base station may configure application times of the ON/OFF indication for the plurality of TCIs to the terminal, and the application times of the ON/OFF indication may be different among the plurality of TCIs.

Hereinafter, specific transmission and reception operations of a terminal according to a TCI ON/OFF indication will be described. First, a PDSCH reception operation of a terminal will be described.

FIG. 7 is a conceptual diagram illustrating a first exemplary embodiment of a repetitive PDSCH transmission method according to a TCI OFF indication.

Referring to FIG. 7, the terminal may receive a first DCI from the base station, and the first DCI may schedule repetitive PDSCH transmission including a first PDSCH to a fourth PDSCH. Each PDSCH included in the repetitive PDSCH transmission may be referred to as a PDSCH repetition or a PDSCH instance. The PDSCH repetition and PDSCH instance may be interpreted as having the same meaning. The first to fourth PDSCHs may include the same TB (or, in case of some multi-layer transmission, TB(s)). The first to fourth PDSCH may correspond to the same HARQ process. The base station may apply the above-described unified TCI indication method for beam management of the terminal. In this case, the terminal may receive an indication of applying a first TCI set in a period (e.g., slot) to which the first PDSCH and the second PDSCH are allocated. The first TCI set may include a first TCI that is a TCI #A and a second TCI that is a TCI#B. Each of A and B may be 0 or a natural number. Each of A and B may be a TCI index. Using the above-described method, the terminal may receive an indication of turning off the second TCI from the base station. For example, the indication (e.g., OFF indication for the second TCI) may be performed by a DCI (e.g., group common DCI) other than the first DCI. The indication (e.g., OFF indication for the second TCI) may be applied during the repetitive PDSCH transmission. For example, an application time of the indication, indicated as t1 in FIG. 7, may be later than an end time of the second PDSCH and may be the same as or earlier than a start time of the third PDSCH. In other words, the application time of the indication may be a time between the end time of the second PDSCH and the start time of the third PDSCH.

As in the above-described exemplary embodiment, when the application time of the TCI OFF indication is determined as a certain time during the repetitive PDSCH transmission (e.g., strictly speaking, a symbol between the first symbol of the first PDSCH and the last symbol of the last PDSCH (e.g., fourth PDSCH) constituting the repetitive PDSCH transmission), the terminal may turn off the TCI from the determined application time. As shown in FIG. 7, the terminal may turn off the second TCI (e.g., TCI #B) from the time t1. As a result, a TCI set that the terminal applies to downlink reception may change from the first TCI set to a second TCI set based on the time t1. The second TCI set may include the first TCI that is the TCI #A.

The terminal may perform a PDSCH reception operation normally until the TCI set is changed by the TCI OFF indication. The normal performance of the PDSCH reception operation may have the same meaning as performing a PDSCH reception operation scheduled by the first DCI. In other words, the terminal may receive the first PDSCH and the second PDSCH based on the first TCI set. A plurality of TCIs may be mapped to PDSCH repetitions in an interlaced manner. In this case, the first TCI and the second TCI may be applied to the first PDSCH and the second PDSCH, respectively. For the third PDSCH and the fourth PDSCH, the terminal may omit a PDSCH reception operation in a period (e.g., slot(s)) to which the TCI set changed by the TCI OFF indication is applied. In other words, the terminal may not receive the third PDSCH and the fourth PDSCH. Alternatively, the terminal may receive PDSCH(s) belonging to the period to which the changed TCI set is applied based on the second TCI set, which is the changed TCI set. In other words, the terminal may receive the third PDSCH and the fourth PDSCH using the first TCI (e.g., TCI#A), which is the remaining TCI that is not turned off. Alternatively, the second TCI (e.g., TCI #B), which is in the OFF state, may be replaced with a default TCI. In other words, the second TCI set may include the first TCI (e.g., TCI #A), which is the remaining TCI that is not turned off, and the default TCI. The terminal may receive the third PDSCH and the fourth PDSCH based on the first TCI (e.g., TCI #A) and the default TCI constituting the second TCI set. The default TCI may be determined based on configuration information from the base station and/or a rule defined in technical specifications. For example, the default TCI may be determined based on a method described below. Alternatively, the terminal may maintain, for all PDSCHs, TCI mapping (e.g., mapping based on the first TCI set) before the TCI set is changed by the TCI OFF indication, and omit a reception operation of PDSCH mapped to the TCI(s) that are turned off. For example, based on an interlaced mapping rule, the terminal may assume that the first TCI, TCI #A, is applied to the first PDSCH and the third PDSCH, and the second TCI, TCI #B, is applied to the second PDSCH and the fourth PDSCH. In this case, since the TCI #B is turned off in a second TCI set period (e.g., period to which the second TCI set is applied), the terminal may not receive the fourth PDSCH corresponding to the TCI#B. Since the TCI #A is still in the ON state in the second TCI set period, the terminal may receive the third PDSCH corresponding to the TCI #A. Even if reception of some PDSCH(s) constituting the repetitive PDSCH transmission is omitted by the above-described method, an HARQ-ACK transmission resource corresponding to the repetitive PDSCH transmission may be determined based on a resource of the last PDSCH constituting the repetitive PDSCH transmission.

Alternatively, the terminal may maintain, for all PDSCHs, TCI mapping (e.g., mapping based on the first TCI set) before the TCI set is changed by the TCI OFF indication, and may receive all the PDSCHs based on the TCI mapping. For example, based on the interlaced mapping rule, the terminal may receive the first PDSCH and the third PDSCH based on the first TCI, TCI #A, and may receive the second PDSCH and the fourth PDSCH based on the second TCI, TCI #B. In other words, the terminal may perform a reception operation based on the first TCI set for at least the repetitive PDSCH transmission in the second TCI set period. In this case, the terminal may receive downlink signals other than the PDSCHs based on the first TCI set in a period until a slot in which the repetitive PDSCH transmission is completed or a slot in which at least the third and fourth PDSCHs are received. In other words, an application time of the TCI OFF indication indicated to the terminal may be delayed after a time when the repetitive PDSCH transmission is completed. Alternatively, in the second TCI set period, the terminal may exceptionally apply the previous TCI set (e.g., the first TCI set) to a PDSCH reception operation, and apply the second TCI set according to the TCI OFF indication to a reception operation of other downlink signals.

Alternatively, the base station may not transmit an indication for switching the TCI(s) used for PDSCH reception to the OFF or ON state to the terminal during the terminal's repetitive PDSCH transmission. The terminal may not expect to receive such the indication from the base station. As a method similar to the above-described method, the terminal may not expect a TCI applied to each PDSCH constituting repetitive PDSCH transmission to be changed by a TCI ON/OFF indication.

Hereinafter, a PDCCH reception operation of a terminal according to a TCI ON/OFF indication will be described. When a single TCI is configured for a CORESET, the terminal may omit a monitoring operation on the CORESET associated with a turned-off TCI (e.g., TCI in the OFF state) from an application time (e.g., slot) of a TCI OFF indication. When a plurality of TCIs are configured for a CORESET, the terminal may change or omit a monitoring operation of the CORESET associated with a turned-off TCI from an application time (e.g., slot) of a TCI OFF indication. For example, the terminal may monitor the CORESET based on the remaining TCIs that are not the turned off TCI among the TCIs configured for the CORESET.

Meanwhile, the CORESET #0 may be associated with the turned-off TCI. In other words, the base station may indicate the terminal to turn off a TCI configured or applied to the CORESET #0. By the above-described method, the terminal may skip a monitoring operation on the CORESET #0. According to the above-described method, the terminal may not be able to monitor search space sets (e.g., Type 0, 0A, 1, or 2 CSS set) that need to be monitored essentially, and it may be difficult for the base station to effectively control the terminal. To solve the above-described problems, the base station may need to configure a separate CORESET including the search space set(s) in the terminal in addition to the CORESET #0. Due to the above-described operation, resource and signaling overhead may increase.

As a method for solving the above-described problem, the terminal may not expect to receive an OFF indication for the TCI configured or applied to the CORESET #0 from the base station. If a unified TCI indication is applied to the CORESET #0, it may be inevitable that the TCI of the CORESET #0 is changed. Alternatively, when the TCI applied to the CORESET #0 is switched to the OFF state, the terminal may replace the TCI to be applied to monitoring on the CORESET #0 with another TCI. The another TCI may be referred to as a default TCI, backup TCI, or the like. The default TCI may be one of TCI(s) that the terminal recently applied to PDCCH monitoring. For example, the terminal may consider a TCI applied to a CORESET satisfying a specific condition (e.g., CORESET with the lowest ID) among CORESET(s) mapped to the latest slot to which a CORESET (e.g., CORESET #0) is mapped as the default TCI, and may use the default TCI for monitoring on the CORESET #0. For another example, the terminal may consider one TCI (e.g., TCI with the lowest ID) among PDSCH TCI candidates (e.g., activated PDSCH TCI candidates, TCI candidates belonging to a TCI pool) as the default TCI, and may use the default TCI for monitoring on the CORESET #0. The above-described method may be equally or similarly applied to transmission and reception of other downlink signals (e.g., PDSCH or CSI-RS scheduled by a PDCCH transmitted in the CORESET #0) and/or uplink signals that have a QCL relationship with the CORESET #0. Meanwhile, when a plurality of TCIs are configured for the CORESET #0 (e.g., when the SFN scheme is applied), the terminal may still the monitor CORESET #0 based on TCI(s) other than the turned-off TCI (e.g., TCI in the OFF state) among the plurality of TCIs. In this case, a method of replacing the TCI of the CORESET #0 with the default TCI may be unnecessary.

Meanwhile, if a quality of all beams of a downlink control channel or beams corresponding to a downlink control channel deteriorates below a threshold, the terminal may determine (e.g., declare, detect) a beam failure, and initiate a beam recovery procedure. For the above-described operation, the terminal may receive configuration for reference signal(s) for beam failure detection through explicit or implicit signaling. The reference signal for beam failure detection may be referred to as a beam failure detection (BFD)-RS, and a set of BFD-RSs may be referred to as q0. When the BFD-RS is configured by implicit signaling, the terminal may regard QCL source signal(s) of the CORESET(s) configured for the terminal as BFD-RS(s), and may form q0 with the regarded BFD-RS(s). In addition, when a beam failure is determined, the terminal may search for a new beam to replace the previous beam from a candidate beam set. The candidate beam set may include reference signal(s), and the reference signal may be referred to as a new beam identification (NBI)-RS. A set of NBI-RSs may be referred to as q1.

When the terminal performs multi-TRP transmission, the above-described beam failure detection operation may be performed for each TRP. For example, the terminal may receive configuration for a plurality of BFD-RS sets corresponding to a plurality of TRPs, and determine whether or not a beam fails for each BFD-RS set. For another example, the terminal may receive configuration for a plurality of CORESET pools corresponding to a plurality of TRPs, and determine whether a beam fails for each CORESET pool. If a reception strength or beam quality (e.g., L1-RSRP, L1-SINR) of all signals corresponding to a BFD-RS set or CORESET pool is equal to or less than a threshold, the terminal may declare a beam failure for the BFD-RS set or CORESET pool. When a new beam candidate for the BFD-RS set or the CORESET pool is searched, the terminal may transmit information on the new beam candidate and information on the beam failure (e.g., information on the CORESET pool in which the beam failure occurs) to the base station, and perform a beam recovery request operation for the BFD-RS set or the CORESET pool. The new beam candidate may be one of the reference signals belonging to the BFD-RS set in which beam failure is determined or the reference signals belonging to the NBI-RS set correlated with the CORESET pool. To support the above-described operation, the terminal may receive configuration for multiple NBI-RS sets. The above-described information may be transmitted on a PUSCH. In order to transmit the above-described information, the terminal may transmit a scheduling request (SR) to the base station in a PUCCH resource, receive allocation of a PUSCH resource according to the SR from the base station, and transmit the above-described information to the base station in the PUSCH resource.

The base station may indicate the terminal performing a per-TRP beam recovery procedure to turn off a specific TCI, and the terminal may omit a monitoring operation of a BDF-RS set or CORESET pool (hereinafter, referred to as 'first BFD-RS set') associated the turned-off TCI according to the indication (e.g., TCI OFF indication). The terminal may stop a downlink reception operation and/or uplink transmission operation associated with the first BFD-RS set. In other words, the terminal may stop communication with a TRP associated with the first BFD-RS set. If there is only one BFD-RS set (hereinafter referred to as 'second BFD-RS set') other than the first BFD-RS set, the terminal may perform communication with one TRP corresponding to the second BFD-RS set. In this case, the per-TRP beam recovery procedure of the terminal may be switched to a per-serving cell beam recovery procedure. A switching time of the beam recovery procedure may coincide with an application time of the TCI OFF indication. For example, the terminal may determine a beam failure for a union of q0s corresponding to the configured BFD-RS sets. When a TCI of the first BFD-RS set is switched back to the ON state, the terminal may resume monitoring on the first BFD-RS set. Accordingly, the terminal may resume the per-TRP beam recovery procedure again. A restart time of the beam recovery procedure may coincide with a restart time of monitoring on the first BFD-RS set.

Meanwhile, the BFD-RS set and/or NBI-RS set may be composed of a plurality of signals with different TCIs. For example, the first BFD-RS set may include a signal with a first TCI and a signal with a second TCI. When the first TCI is switched to the OFF state by the above-described method, the terminal may determine a beam failure based on signals (e.g., signals with the second TCI) excluding the signal with the first TCI from the first BFD-RS set. The first NBI-RS set may include a signal with a third TCI and a signal with a fourth TCI. When the third TCI is switched to the OFF state by the above-described method, the terminal may regard signals (e.g., signals with the fourth TCI) excluding the signal with the third TCI in the first NBI-RS set as candidate beams. Alternatively, the operation of the terminal determining a beam failure or searching for a new beam candidate may be performed regardless of ON/OFF state(s) of the TCI(s) belonging to the BFD-RS set or the NBI-RS set.

In the present disclosure, a TCI whose ON or OFF state is indicated may mean a TCI within a TCI pool configured in the terminal or a set of TCI(s) activated in the terminal. The TCI pool may refer to a set of candidate TCIs that can be indicated/applied. The TCI pool may be configured in the terminal as being separated into a downlink TCI pool and an uplink TCI pool. Alternatively, a joint TCI pool for the downlink TCI pool and the uplink TCI pool may be configured. A TCI in the joint TCI pool may be applied to both downlink reception and uplink transmission. The TCI pool may be reconfigured by RRC signaling, and a set of active TCI(s) may be changed by a MAC CE. Considering the above-described operations, a TCI indicated by a DCI may be determined within the valid TCI pool or active TCIs in a corresponding slot.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a first terminal, the method comprising:
performing communication with a first transmission and reception point (TRP) and a second TRP associated with the base station;
receiving a transmission configuration information (TCI) ON/OFF indication for at least one TRP among the first TRP and the second TRP;
identifying a TCI indicated to be in an OFF state based on the TCI ON/OFF indication; and
performing communication with a remaining TRP other than the at least one TRP in which the TCI is configured among the first TRP and the second TRP.

2. The method of claim 1, wherein one TCI is configured in each of the first TRP and the second TRP, an OFF state indication for the TCI configured in the first TRP is an OFF state indication for the first TRP, and an OFF state indication for the TCI configured in the second TRP is an OFF state indication for the second TRP.

3. The method of claim 1, wherein the TCI ON/OFF indication is included in group common downlink control information (DCI) transmitted to a terminal group including the first terminal and a second terminal, and the first terminal and the second terminal included in the terminal group are all terminals connected to the at least one TRP in which the TCI indicated to be in the OFF state is configured.

4. The method of claim 3, wherein the TCI ON/OFF indication indicates an OFF state of an n-th TCI among a plurality of TCIs configured in the first terminal and the second terminal, an index of the n-th TCI configured in the first terminal is different from an index of the n-th TCI configured in the second terminal, and n is a natural number.

5. The method of claim 1, wherein when the TCI indicated to be in the OFF state is a downlink TCI, the first terminal does not perform downlink communication based on the downlink TCI with the at least one TRP, and when the TCI indicated to be in the OFF state is an uplink TCI, the first terminal does not perform uplink communication based on the uplink TCI with the at least one TRP.

6. The method of claim 1, further comprising: when a plurality of TCIs including the TCI indicated to be in the OFF state are configured in the at least one TRP, performing communication with the at least one TRP based on remaining TCI(s) not indicated to be in the OFF state among the plurality of TCIs.

7. The method of claim 6, wherein the communication between the first terminal and the at least one TRP configured with the plurality of TCIs is switched from multi-TCI-based transmission to single-TCI-based transmission by the TCI ON/OFF indication.

8. The method of claim 1, further comprising: receiving information on an application time of the TCI ON/OFF indication, wherein the TCI ON/OFF indication is applied after the application time.

9. The method of claim 1, further comprising: receiving information on a duration to which the TCI ON/OFF indication is applied, wherein the TCI ON/OFF indication is applied during the duration, and the TCI ON/OFF indication is not applied after the duration.

10. A method of a first terminal, the method comprising:
receiving configuration of a first control resource set (CORESET) pool for a first transmission and reception point (TRP) associated with a base station and configuration of a second CORESET pool for a second TRP associated with the base station;
receiving an ON/OFF indication for at least one CORESET pool among the first CORESET pool or the second CORESET pool;
identifying one CORESET pool indicated to be in an OFF state based on the ON/OFF indication; and
performing a physical downlink control channel (PDCCH) monitoring operation in a remaining CORESET pool other than the one CORESET pool among the first CORESET pool and the second CORESET pool.

11. The method of claim 10, wherein the ON/OFF indication is included in group common downlink control information (DCI) transmitted to a terminal group including the first terminal and a second terminal, and the first terminal and the second terminal included in the terminal group are all terminals in which the one CORESET pool indicated to be in the OFF state is configured.

12. The method of claim 10, wherein the PDCCH monitoring operation is not performed in the one CORESET pool indicated to be in the OFF state.

13. The method of claim 10, wherein when the one CORESET pool indicated to be in the OFF state includes a plurality of CORESETs, the PDCCH monitoring operation is not performed in all of the plurality of CORESETs.

14. The method of claim 10, wherein at least one of downlink communication or uplink communication based on a transmission configuration information (TCI) configured in the one CORESET pool indicated to be in the OFF state is not performed.

15. A method of a base station, the method comprising:
transmitting, to one or more terminals, a transmission configuration information (TCI) ON/OFF indication for at least one transmission and reception point (TRP) among a first TRP and a second TRP associated with the base station; and
performing communication with the one or more terminals using a remaining TRP other than the at least one TRP in which a TCI indicated to be in an OFF state based on the TCI ON/OFF indication is configured.

16. The method of claim 15, wherein one TCI is configured in each of the first TRP and the second TRP, an OFF state indication for the TCI configured in the first TRP is an OFF state indication for the first TRP, and an OFF state indication for the TCI configured in the second TRP is an OFF state indication for the second TRP.

17. The method of claim 15, wherein the TCI ON/OFF indication is included in group common downlink control information (DCI) transmitted to a terminal group including the one or more terminals, and the one or more terminals included in the terminal group are all terminals connected to the at least one TRP in which the TCI indicated to be in the OFF state is configured.

18. The method of claim 17, wherein the TCI ON/OFF indication indicates an OFF state of an n-th TCI among a plurality of TCIs configured in the one or more terminals, an index of the n-th TCI configured in a first terminal among the one or more terminals is different from an index of the n-th TCI configured in a second terminal among the one or more terminals, and n is a natural number.

19. The method of claim 15, wherein when the TCI indicated to be in the OFF state is a downlink TCI, downlink communication based on the downlink TCI is not performed by the at least one TRP, and when the TCI indicated to be in the OFF state is an uplink TCI, uplink communication based on the uplink TCI is not performed by the at least one TRP.

20. The method of claim 15, further comprising: transmitting at least one of information on an application time of the TCI ON/OFF indication or information on a duration of the TCI ON/OF indication to the one or more terminals, wherein the application time is a time when the TCI ON/OFF indication is applied, and the duration is a duration to which the TCI ON/OF indication is applied.
